# EUROPÄISCHE PATENTSCHRIFT

(11) **EP 2 647 119 B1**
(45) Veröffentlichungstag und Bekanntmachung des Hinweises auf die Patenterteilung: **25.07.2018**
(21) Anmeldenummer: 11776111.4
(22) Anmeldetag: 25.10.2011
(51) Int. Cl.: H02M 1/42, H02M 7/483, H02M 7/49

(54) **NEUE MULTILEVELKONVERTERTOPOLOGIE MIT DER MÖGLICHKEIT ZUR DYNAMISCHEN SERIELL- UND PARALLELSCHALTUNG VON EINZELMODULEN**
NOVEL MULTI-LEVEL CONVERTER TOPOLOGY WITH THE POSSIBILITY OF DYNAMICALLY CONNECTING INDIVIDUAL MODULES IN SERIES AND IN PARALLEL
NOUVELLE TOPOLOGIE DE CONVERTISSEUR MULTI-NIVEAUX PERMETTANT LE MONTAGE DYNAMIQUE EN SÉRIE ET EN PARALLÈLE DE MODULES INDIVIDUELS

(30) Priorität: 30.11.2010 DE 102010052934; 30.08.2011 EP 11179321
(43) Veröffentlichungstag der Anmeldung: 09.10.2013
(73) Patentinhaber: Technische Universität München, 80333 München (DE)
(72) Erfinder: WEYH, Thomas, 80637 München (DE); GÖTZ, Stefan, M., 85659 Forstern (DE)
(74) Vertreter: Lucke, Andreas
(86) Internationale Anmeldenummer: PCT/EP2011/005385
(87) Internationale Veröffentlichungsnummer: WO 2012/072168

(56) Entgegenhaltungen:
- EP-A1- 1 976 107
- WO-A1-2008/046772
- WO-A2-03/090331
- DE-A1- 4 203 882
- US-A- 5 483 433
- US-A- 5 761 058
- GATEAU G ET AL: "STACKED MULTICELL CONVERTER (SMC): TOPOLOGY AND CONTROL", 1. Januar 2001 (2001-01-01), EPE 2001. 9TH. EUROPEAN CONFERENCE ON POWER ELECTRONICS AND APPLICATIONS. (CD-ROM VERSION). GRAZ, AUG. 27 - 29, 2001; [EPE . EUROPEAN CONFERENCE ON POWER ELECTRONICS AND APPLICATIONS], BRUSSELS : EPE ASSOCIATION, BE, PAGE(S) 1 - 10, XP001044195, ISBN: 978-90-75815-06-1 "Control of the topology"; Abbildung 8

## Beschreibung

Die Erfindung betrifft eine spezielle Ausführungsform eines Direktumrichters und seiner einzelnen modularen Komponenten. Der Direktumrichter kann dabei ein- oder mehrphasig ausgeführt sein und eingangsseitig Gleich- oder Wechselstrom in einen Gleich- oder Wechselstrom beliebiger Phasenlage und Frequenz umwandeln. Derartige Umrichter haben sehr vielfältige Einsatzmöglichkeiten; sie können beispielsweise zur gesteuerten Stromversorgung elektrischer Maschinen, aber auch zur Anbindung von Gleichstromquellen (Batteriespeicher, Solaranlagen) an ein Wechselstromnetz verwendet werden.

### HINTERGRUND DER ERFINDUNG

Ein großer Teil des Energieverbrauchs und der Energieerzeugung geschieht über elektrische Energie. Die Umwandlung elektrischer Energie kann dabei in verschiedene Strom-Spannungskombinationen erfolgen; andererseits kann hinsichtlich des zeitlichen Verlaufes der elektrischen Energie eine Umwandlung von Gleich- zu Wechsel- oder Drehspannung (mit variabler oder fixer Frequenz) und umgekehrt erfolgen. Diese Umwandlung geschieht mittlerweile vorwiegend über leistungselektronische Anlagen, so genannte Umrichter.

Die fortwährende Entwicklung der vor etwa 30 Jahren eingeführten Halbleitertechnik in die Leistungselektronik ermöglicht und unterstützt die Realisierung solcher Umrichter für immer höhere Leistungs- und Spannungsbereiche. Heute werden z.B. im Mittelspannungsbereich zum Schalten von elektrischen Strömen und Spannungen überwiegend IGBTs und IGCTs verwendet. Durch die ständige Weiterentwicklung der Halbleiter und deren Fertigungsprozesse hat die Zuverlässigkeit und Leistungsdichte dieser Bauelemente signifikant zugenommen.

Der Entwicklungsfortschritt von Halbleitern begünstigt auch die Entwicklung neuartiger Umrichtertopologien. Neben den HGÜ-Anlagen (Hochspannungs-Gleichstrom-Übertragung) im Hochspannungsbereich, welche bisher mit Thyristorschaltungen realisiert werden, sind Mehrpunktumrichter mit wesentlich verbesserten Eigenschaften zur Energieübertragung, Spannungs- bzw. Frequenzwandlung und Blindleistungskompensation in den Mittelpunkt des Interesses gerückt.

Insbesondere in Anwendungsgebieten im Energieversorgungsbereich sind die Schaltspannungen für Umrichter erheblich höher als die Sperrspannungen verfügbarer Leistungshalbleiter. Daher werden in solchen Einsatzgebieten Schaltungstopologien eingesetzt, welche eine gleichmäßige Aufteilung der hohen Spannung auf mehrere Schaltglieder ermöglichen. Eine nahe liegende Methode ist die direkte Serienschaltung von Leistungshalbleitern in Umrichterzweigen. Daher wird oftmals jede Umrichterphase aus einer Serienschaltung von Halbleiterschaltern aufgebaut, wobei der Umrichter einen Zwischenkreisspeicher in Form eines Kondensators benötigt, welcher direkt mit der Hochspannung des Zwischenkreises verbunden ist.

Diese Form der Umrichter werden allerdings mit zunehmender Spannung immer aufwändiger, da eine gleichmäßige Spannungsaufteilung der in Serie geschalteten Halbleiter und entsprechende Schutzmaßnahmen zur Vermeidung von Überspannungen an den einzelnen Halbleitern erforderlich sind.

Im Fehlerfall können über den Kondensator des Zwischenkreises extrem hohe Entladeströme fließen, welche wiederum Zerstörungen infolge hoher mechanischer Kraftwirkungen und/oder Lichtbogenschäden verursachen können.

Ein weiterer Nachteil besteht darin, dass variable Spannungen über diese Art von Stromrichtern nur über entsprechende Tastverhältnisse der PWM-Konvertierung erfolgen können, so dass sich bei großen Spannungsunterschieden ungünstige Tastverhältnisse ergeben.

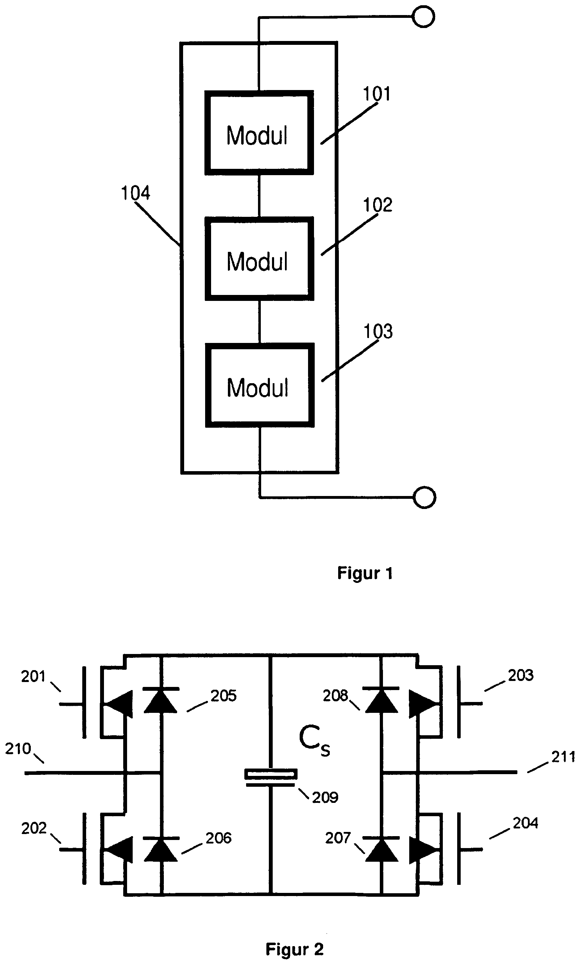

Viele Nachteile konventioneller Umrichter können durch den modularen Multilevelkonverter gelöst werden, wie er in DE 102 17 889 von R. Marquardt genauer beschrieben ist. Dieses System ist in der Lage nahezu beliebige Spannungsverläufe von den Klemmenpaaren der einen Seite in ebenso beliebige Verläufe zwischen den Klemmenpaaren der anderen Seite umzusetzen, ohne dabei seinem Prinzip nach zwischen einem Ein- und einem Ausgang unterscheiden zu müssen. Beim modularen Multilevelkonverter nach R. Marquardt wird jede Phase des Umrichters aus einer Vielzahl von in Serie geschalteten identischen Einzelmodulen aufgebaut. Figur 1 zeigt eine Serienschaltung dreier gleicher Module 101, 102, 103, die einen Brückenzweig 104 eines modularen Multilevelkonverters bilden. Jedes Einzelmodul fungiert als ein Zweipol und enthält ein Energiespeicherelement, sowie mehrere Schaltelemente, die für beide Spannungsrichtungen wahlweise Strom aufnehmen oder abgeben können und damit alle vier Quadranten des Strom-Spannungs-Graphen erreichen. Figur 2 zeigt eine Ausführungsform eines einzelnen Zweipols eines modularen Multilevelkonverters. Parallel zu den Transistoren 201 bis 204 ist jeweils eine Diode 205 bis 208 geschaltet. Die Transistoren können die Ausgangsklemmen 210 und 211 mit dem Kondensator 209 elektrisch verbinden. Insbesondere können diese Einzelmodule über ihre Schalter in die folgenden vier Zustände geschaltet werden:
- Vorgabe einer positiven Klemmenspannung bei beliebiger Stromrichtung;
- Vorgabe einer negativen Spannung mit beliebiger Stromrichtung;
- Bypasszustand (d. h. keine Energieaufnahme oder -abgabe durch das Einzelmodul), freier Stromfluss in beliebiger Richtung;
- Erzwingen einer Energieaufnahme durch das Einzelmodul unter Aufzwingen des Spannungsniveaus.

Ein solches Einzelmodul ist somit - bei entsprechender Steuerung beispielsweise mit getaktetem Schalten der aktiven Elemente (ggf. in Analogie zur Pulsweitenmodulation) - bereits in der Lage seine Energieaufnahme und -abgabe beliebig zu steuern und einer Quelle eine virtuelle Last mit bestimmten Eigenschaften näherungsweise vorzutäuschen Diese Module können nun je nach Anwendungswunsch für n Quellen (beispielsweise zwei einlaufende Spannungssysteme) und m Ausgänge (beispielsweise ein Dreiphasenniederspannungssystem) für vollen Vierquadrantenbetrieb verschaltet werden.

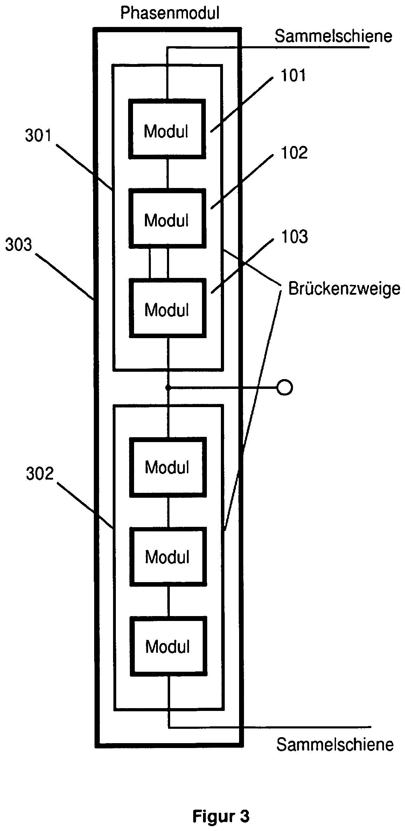

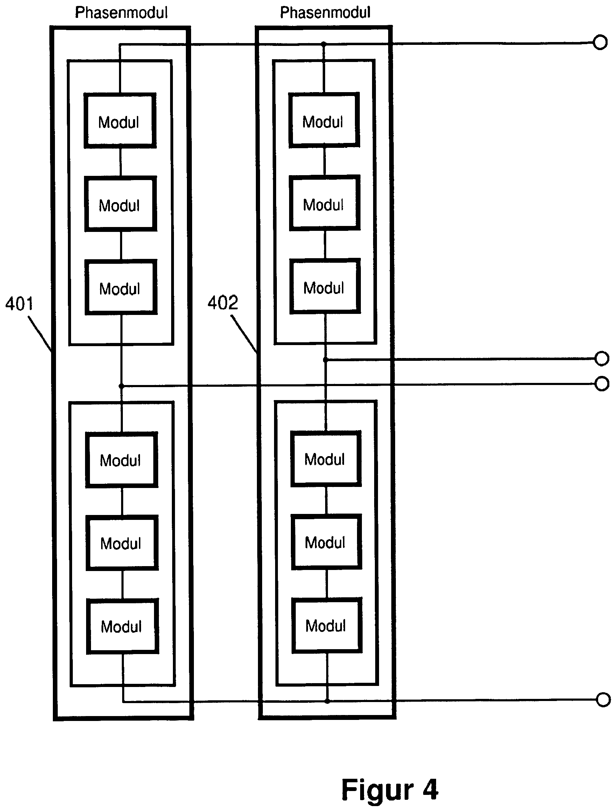

Eine Kombination zweier Serienschaltungen aus jeweils z Modulen wird dabei als Phasenmodul bezeichnet, wobei die beiden Serienschaltungen jeweils einen sogenannten Brückenzweig bilden. Figur 3 zeigt ein Phasenmodul 303 bestehend aus zwei Brückenzweigen 301 und 302, wobei die Brückenzweige aus einzelnen Modulen aufgebaut sind. Die Anzahl z der Module in jedem Brückenzweig definiert Spannungs- und Oberwelleneigenschaften des Umrichters. Die Phasenmodule wiederum bilden die Grundbausteine eines ein oder mehrphasigen Stromrichters. So kann beispielsweise durch zwei zusammengeschaltete Phasenmodule 401 und 402 gemäß Figur 4 ein System zur Umwandlung einer 1-phasigen Wechselspannung bzw. einer Gleichspannung in eine andere 1-phasigen Wechselspannung bzw. eine Gleichspannung verwendet werden. Der Aufbau eines solchen Systems ist dabei vollkommen symmetrisch bezüglich der Ein- bzw. Ausgänge und ermöglicht somit gegenüber jedem Anschlusspaar einen vollständigen Vierquadrantenbetrieb. Weiterhin kann sowohl eingangsseitig als auch ausgangsseitig das Verhalten des Stromrichters bzgl. induktivem oder kapazitivem Verhalten individuell angepasst werden. Der Energiefluss ist somit auch in beide Richtungen möglich und kann dynamisch verändert werden.

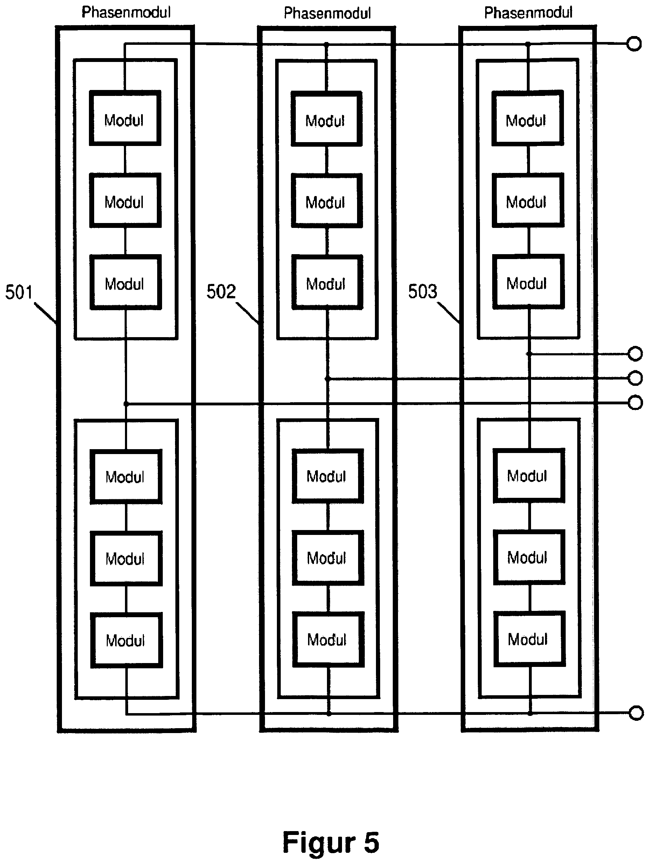

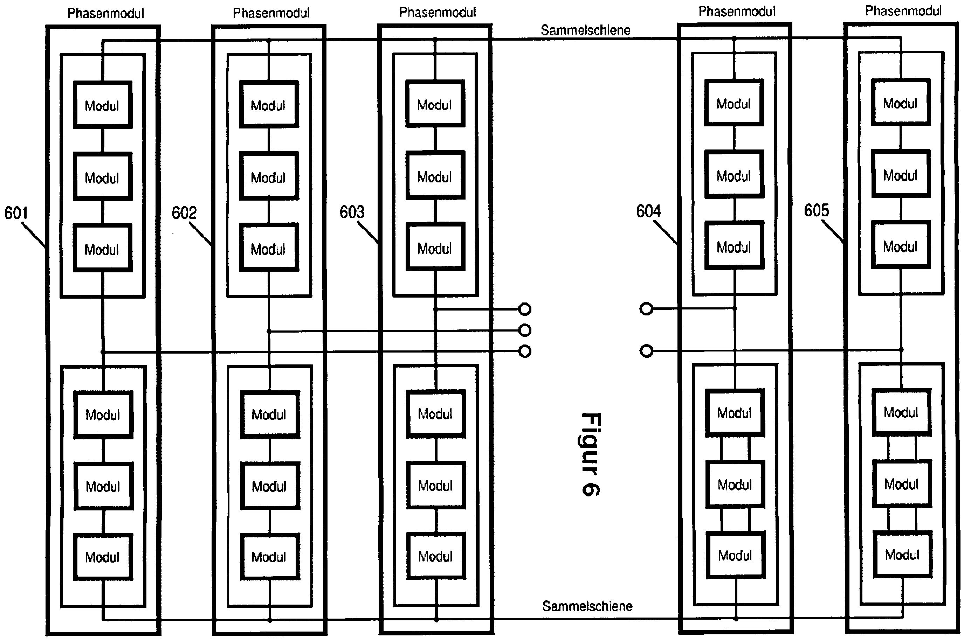

Weiterhin kann beispielsweise durch drei zusammengeschaltete Phasenmodule 501, 502 und 503 gemäß Figur 5 ein System zur Umwandlung einer 3-phasigen Wechselspannung in eine 1-phasige Wechselspannung bzw. eine Gleichspannung realisiert werden. Die zusammengefassten Anschlüsse der Phasenmodule können auch als sogenannte (Gleichspannungs-) Sammelschiene betrachtet werden, so dass durch Zusammenschalten von n + m Phasenmodulen eine Netzkupplung für die Kopplung eines n-phasiges Netzes mit einem m-phasigen Netz entsteht. In Figur 6 ist beispielhaft die Zusammenschaltung von 5 Phasenmodulen 601 bis 605 dargestellt, um eine Kopplung eines 3-phasigen Drehstromnetzes mit einem zweiphasigen Netz zu realisieren.

Sind bestimmte Bereiche der Strom-Spannungs-Ebene ausreichend; d.h. ist kein vollständiger Vierquadrantenbetrieb erforderlich, kann die Verschaltung entsprechend vereinfacht werden.

Im Gegensatz zu einer einfachen PWM-Wandlung, die aus einer Quelle nur zwei Spannungsstufen (0 und die volle Eingangsspannung) schalten und entsprechend über Taktung und Glättung verarbeiten kann, ist das System des modularen Multilevelkonverters in der Lage je nach Anzahl z an Modulen, im äquivalenten Fall 2z+1 verschiedene stabile Spannungszustände zu erzeugen. Durch entsprechende hochfrequente Taktung oder asynchrone Schaltung können daher auch sehr schnelle Spannungsverläufe äußerst exakt und mit sehr geringem Oberwellenanteil erzeugt werden. Jedoch ist auch eine reine Treppenapproximation möglich.

Ein weiterer Vorteil des modularen Multilevelkonverters besteht darin, dass sich die Energiespeicher des Umrichters verteilt in den einzelnen Modulen befinden und nicht mehr als ein einzelner großer Speicherkondensator aufgebaut werden muss. Damit können Stromrichter mit dieser Umrichtertopologie ohne einen einzelnen großen Gleichspannungszwischenkreis aufgebaut werden, über den im Fehlerfall extrem große Kurzschlussströme fließen können. Die Speicherkondensatoren der Einzelmodule ermöglichen in Verbindung mit entsprechenden Dioden über den Schaltern auch ein sehr wirkungsvolles Abdämpfen möglicher Spannungsspitzen, um beispielsweise die Halbleiter zu schützen. Damit ist eine Beschaltung der Ein- und Ausgänge mit weiteren Kondensatoren, deren Isolationsvermögen der gesamten Maximalspannung standhalten müsste, im Gegensatz zu anderen Umrichtertopologien nicht notwendig.

Weiterhin gestattet der Vierquadrantenbetrieb dieses Umrichtertyps auch Anwendungen wie die Kompensation von Blindleistung.

Der Aufbau des Umrichters aus einer Vielzahl identischer Einzelmodule gestattet zudem eine Redundanz, so dass bei Ausfall eines oder mehrerer dieser Zweipole die Funktionstüchtigkeit des Umrichters ohne zusätzliche Umschalteinrichtungen gewährleistet werden kann.

Gegenüber anderen Umrichtertopologien bietet der modulare Multilevelkonverter zudem den Vorteil, dass die Bauelemente der jeweiligen Module nicht auf die vollen Maximalspannungslevel des Ein- und Ausgangs ausgelegt werden müssen, sondern nur die Modulspannungen isolieren müssen. Für viele Anwendungsgebiete dieses Umrichtertyps hat dieser Aspekt eine wichtige wirtschaftliche Bedeutung bzw. erlaubt überhaupt erstmals den Einsatz von Halbleitern für solche Zwecke.

Vereinfacht beschrieben basiert das System auf dem steuerbaren Zuschalten von Modulen in Serie. Module, die für die Erzeugung eines bestimmten Spannungslevels nicht benötigt werden, werden in den Bypasszustand geschaltet, so dass der Energiespeicher seine aktuelle Ladung behält. Dies stellt jedoch ein großes ungenutztes Potential dar. Dieser Fall tritt beispielsweise auf, wenn vom Umrichter nur eine relativ geringe Spannung erzeugt werden soll und somit nur ein Teil der Module aktiv geschaltet wird.

Insbesondere bei Einsatzgebieten, bei denen über den Umrichter ein relativ großes Spannungsverhältnis zwischen Ein- und Ausgang erzeugt werden soll, oder zeitweise kleine Spannungen bei hohen Strömen aufgenommen oder abgegeben werden sollen, ergeben sich hierbei ungünstige Schaltzustände und relativ hohe Leistungsverluste in den entsprechenden Bauelementen.

Stattdessen muss das gesamte System einerseits auf die Maximalspannungen ausgelegt werden, die nur selten genutzt werden; andererseits muss das System gleichzeitig auf den maximalen Strom ausgelegt werden, obwohl Strom und Spannung nicht in allen Anwendungsfällen gleichzeitig ihre jeweiligen Maximalwerte annehmen. Auch die eingesetzten Energiespeicher müssen zwangsweise auf den maximalen Strombedarf ausgelegt werden und müssen daher ebenfalls überdimensioniert werden.

Auch bei medizintechnischen Anwendungen, bei denen man einen Umrichter als Quelle für eine Reizspule zur induktiven Nervenreizung verwendet, stellt die Reizspule eine stark induktive Last dar. Daher treten auch hier die höchsten Ströme bei sehr geringen Spannungen auf. Folglich werden auch bei diesen Anwendungen die Einzelmodule und deren Energiespeicher nicht günstig ausgenutzt.

Ein möglicher Weg, diese Nachteile auszugleichen und auch eine wahlweise Parallelschaltung einzelner Module zu gestatten bietet der Ansatz einer Matrixadressierung der Module, um auf diese Weise beliebig zwischen serieller und paralleler Verschaltung der Energiespeicher von einzelnen Modulen wechseln zu können. Diese maximale und äußerst erstrebenswerte Flexibilität erkauft man sich jedoch mit einer großen Menge an nötigen Halbleiterschaltern, die zudem zum größten Teil mit dem maximalen Gesamtspannungs-niveau umgehen können müssen.

Dieser hohe Preis scheint jedoch außer für Forschungsanwendungen nicht sinnvoll.

US 5,761,058 offenbart einen Umrichter, bei dem eine Schaltung mit geschalteten Kondensatoren eine oder mehrere Sätze von in Reihe geschalteten Zellen umfasst, von denen eine jede einen Kondensator als Spannungsquelle und eine Brückenschaltung zum invertieren der Polarität des Kondensators enthält. Die Schaltung mit geschalteten Kondensatoren ist mit einer Last verbunden. Es sind Mittel vorgesehen, um die Kondensatoren sämtlicher Zellen parallel mit einer DC-Spannungsquelle aufzuladen. Zum Steuern der AC-Ausgabe an die Last kann eine beliebige Anzahl von Zellen-Kondensatoren mit einer beliebigen Polarität in Reihe geschaltet werden, wohingegen die übrigen Zellen-Kondensatoren übersprungen werden. Es ist aber nicht vorgesehen, den Stromrichter so zu steuern, dass mindestens eine Serienschaltung von Kondensatoren und eine Parallelschaltung von Kondensatoren gleichzeitig vorliegt.

Die WO 2008/046772 A1 offenbart eine Umrichterschaltung zur Schaltung einer Vielzahl von Schaltspannungsniveaus, bei der für jede Phase eine erste Schaltgruppe vorgesehen ist. Zur Verringerung der gespeicherten Energie der Umrichterschaltung sowie zur Platzeinsparung sind n zweite Schaltgruppen vorgesehen, welche jeweils einen ersten, einen zweiten, einen dritten, einen vierten, einen fünften und einen sechsten ansteuerbaren bidirektionalen Leistungshalbleiterschalter und einen Kondensator aufweisen. Für n > 1 ist jede der zweiten Schaltgruppen verkettet mit der jeweils benachbarten zweiten Schaltgruppe und die erste Schaltgruppe ist mit der ersten zweiten Schaltgruppe verbunden. Ferner ist eine dritte Schaltgruppe und eine vierte Schaltgruppe vorgesehen, wobei die dritte Schaltgruppe mit der n-ten zweiten Schaltgruppe verbunden ist, die vierte Schaltgruppe mit der n-ten zweiten Schaltgruppe verbunden ist, und die dritte Schaltgruppe mit der vierten Schaltgruppe verbunden ist.

### ÜBERSICHT ÜBER DIE ERFINDUNG

Es ist Aufgabe der Erfindung, ein Verfahren und eine Vorrichtung zur Steuerung und Umwandlung von elektrischem Strom in Form eines Umrichters bereitzustellen, welche die obigen Nachteile nicht aufweist.

Diese Aufgabe wird durch einelektrisches Umrichtersystem mit den in Anspruch 1 genannten Merkmalen, sowie ein Verfahren zur Steuerung einer Anzahl entsprechend verschalteter Einzelmodule nach Anspruch 14 gelöst. Vorteilhafte Ausgestaltungen der Erfindung sind jeweils Gegenstand der Unteransprüche.

Das elektrische Umrichtersystem der Erfindung umfasst mehrere gleichartige hintereinander geschaltete Einzelmodule. Jedes Einzelmodul weist dabei mindestens drei, vorzugsweise mindestens vier interne Schaltelemente, mindestens ein Energiespeicherelement und mindestens vier Anschlüsse auf, wobei je zwei der Anschlüsse als ein erstes und ein zweites Klemmenpaar dienen. Die Hintereinanderschaltung von mindestens zwei Einzelmodulen erfolgt so, dass jeweils die Anschlüsse des zweiten Klemmenpaares eines vorhergehenden Einzelmoduls mit
- entweder den Anschlüssen des ersten Klemmenpaares des jeweils nachfolgenden Einzelmoduls, oder
- Anschlüssen mindestens eines Zwischenmoduls verbunden sind, welches zwischen dem vorhergehenden Einzelmodul und dem jeweils nachfolgenden Einzelmodul angeordnet ist.

Dabei verbinden die Schaltelemente der jeweiligen Einzelmodule in der Hintereinanderschaltung der mindestens zwei Einzelmodule ihre jeweilige Energiespeicherelemente so mit den Klemmen der Hintereinanderschaltung, dass wahlweise eine Reihen- oder Parallelschaltung der Energiespeicherelemente vorliegt. Somit wird ermöglicht, eine Hintereinanderschaltung mehrerer Einzelmodule so zu steuern, dass innerhalb einer solchen Hintereinanderschaltung mindestens eine Serienschaltung von Energiespeicherelementen und eine Parallelschaltung von Energiespeicherelementen gleichzeitig vorliegt. Erfindungsgemäß liegt zusätzlich parallel zu jedem Schaltelement eine Diode, wobei die Dioden so geschaltet sind, dass sie die Schaltelemente vor Verpolung und Überspannung schützen.

Hierbei ist der Begriff "Modul" weit zu verstehen. Die "Module" oder "Einzelmodule" bezeichnen sich wiederholende Bauteilgruppen in eine Schaltungstopologie, aber sie müssen nicht in irgendeiner bestimmten Weise von den übrigen Komponenten der Gesamtschaltung baulich oder strukturell abgegrenzt sein.

Auch der Begriff "Klemme" soll hier keinerlei strukturelle Beschränkung beinhalten, sondern lediglich erläutern, dass es sich dabei um einen Anschluss für bzw. Eingang in ein Modul handelt. In diesem Sinne ist auch der Begriff "als Klemme dienen" zu verstehen. Insbesondere soll der Begriff "Klemme" nicht suggerieren, dass es sich dabei notwendigerweise um einen lösbaren Anschluss handelt. Der Begriff "Klemme" kann vielmehr auch Synonym zu den Begriffen "Anschluss" oder "Eingang" verstanden werden.

Die Erfindung basiert auf der Erkenntnis, dass ein Stromrichter, der aus mehreren Einzelmodulen aufgebaut wird, zusätzlich so ausgeführt werden kann, dass die Energiespeicherelemente wahlweise parallel oder seriell geschaltet werden können. Die Einzelmodule müssen dabei so ausgelegt werden, dass über die internen Schaltelemente wahlweise ein paralleles oder serielles Schalten der Energiespeicherelemente erfolgen kann, so dass keine zusätzlichen externen Schalter wie bei der Matrixadressierung erforderlich sind. Gleichzeitig soll die Erfindung gewährleisten, dass die Spannungsbelastung der internen Schaltelemente nicht wesentlich über der Maximalspannung der Energiespeicherelemente liegt.

Damit kann ein Stromrichter aus einer Hintereinanderschaltung von Einzelmodulen mit einer ähnlichen Schaltungstopologie wie ein Multilevelkonverter aufgebaut werden. Allerdings können die Energiespeicherelemente dieses neuartigen Stromrichters wahlweise in Reihe oder parallel geschaltet werden

Der grundlegende Vorteil einer solchen wahlweisen Verschaltung liegt darin, dass eine Parallelschaltung der Energiespeicherelemente der Einzelmodule den Gesamtinnenwiderstand des Stromrichters (oder eines Zweiges des Stromrichters) verringern, so dass der Stromrichter in diesem Schaltzustand ein Vielfaches mehr an Leistung bereitstellen kann als bisherige Stromrichter. Weiterhin können damit je nach Anwendungsfall auch die Energiespeicher in den Einzelmodulen verkleinert werden.

Weiterhin erlaubt eine Parallelschaltung den einfachen Ladungsausgleich zwischen den Energiespeicherelementen der Einzelmodule. Im Gegensatz dazu hängt bei bisherigen Systemen die Möglichkeit eines Ladungsausgleich von der Verschaltung der Module ab, ob diese ohne einen Strom durch das gesamte System oder auch eines der Anschlusspaare Energie transferieren können. In N. Flourentzou et al., 2009 wird das Fehlen einer solchen Option bisheriger Multilevelkonverter zum Voltage Balancing der Energiespeicher nach einer ungleichmäßigen Belastung als zentrales Problem einiger Multilevelansätze (insbesondere für Neutral-Point Clamped Converters, NPC) bezeichnet. Ein Lösen dieses Problems auch mit einer größeren Anzahl zusätzlicher Leistungshalbleiter wird dabei sogar propagiert.

Unter Verwendung entsprechender neuartiger Einzelmodule mit den entsprechenden Verbindungsanschlüssen untereinander kann ein erfindungsgemäßer Umrichter ähnlich aufgebaut werden, wie der beschriebene Multilevelkonverter. Dies bedeutet, dass mehrere gleichartige Einzelmodule beispielsweise zu einem Brückenzweig zusammengefügt werden können und zwei Brückenzweige wiederum ein Phasenmodul bilden können. Der wesentliche Unterschied der vorliegenden Erfindung zum bisherigen Multilevelkonverter besteht jedoch darin, dass die Einzelmodule des neuartigen Umrichters nicht mehr als einfache Zweipole direkt in Serie geschaltet werden, sondern die neuen Einzelmodule in einer Art Hintereinanderschaltung jeweils über mindestens zwei Anschlüsse mit dem jeweils nächsten Einzelmodul verbunden sind. Somit legt nicht die Hintereinanderschaltung der Einzelmodule, sondern nur der Schaltzustand der internen Schaltelemente fest, ob ein Energiespeicherelement eines Einzelmoduls jeweils in Serie oder parallel zum nachfolgenden Einzelmodul geschaltet werden soll. Damit kann ein Umrichter, der aus solchen Einzelmodulen aufgebaut ist, so gesteuert werden, dass zu bestimmten Zeitpunkten eine Serienschaltung von Energiespeichern vorliegt und zu bestimmten anderen Zeitpunkten eine Parallelschaltung. Entsprechend kann die von einer Hintereinanderschaltung von Einzelmodulen erzeugte Spannung auch gezielt verändert werden.

Damit erlaubt die vorliegende Erfindung den Aufbau besonderer Umrichterschaltungen, welche nahezu beliebige Zeitverläufe bzgl. Eingansspannung und -Strom- zu ebenso nahezu beliebigen Zeitverläufen bzgl. Ausgangsspannung und -Strom umsetzen können. Das Einsatzgebiet reicht dabei von Kleinspannungsanwendungen bis zur Höchstspannungsebene zur Energieübertragung mit bis zu einer Million Volt. Die hier beschriebene Erfindung erlaubt, je nach genauem Aufbau, den Betrieb in allen vier Quadranten des Strom-Spannungs-Graphen; d.h. die Konverterschaltungen können ein- und ausgangsseitig für beide Spannungsrichtungen wahlweise Strom aufnehmen oder abgeben.

Wie eingangs erwähnt kann das Umrichtersystem eine Mehrzahl direkt hintereinander geschalteter Einzelmodule umfassen. In diesem Fall erfolgt die Hintereinanderschaltung so, dass jeweils die Anschlüsse des zweiten Klemmenpaares eines vorhergehenden Einzelmoduls mit den Anschlüssen des ersten Klemmenpaares des jeweils nachfolgenden Einzelmoduls verbunden wird. Die Erfindung ist jedoch nicht auf eine solche Ausführungsform beschränkt. Stattdessen kann zwischen zwei in der Hintereinanderschaltung aufeinander folgenden Einzelmodulen auch ein weiteres Bauteil oder eine weitere Baugruppe vorgesehen sein, das oder die hier allgemein als "Zwischenmodul" bezeichnet wird. Beispielsweise kann ein solches Zwischenmodul durch ein Ausgleichsglied zur Zwischenpufferung von Energie der Energiespeicherelemente gebildet werden, wobei diese Ausgleichsglied beispielsweise eine Induktivität enthalten kann. Wesentlich ist lediglich, dass die Energiespeicherelemente in - direkt oder indirekt - aufeinanderfolgenden Einzelmodulen wahlweise in Reihe oder parallel geschaltet werden können.

In der folgenden Beschreibung werden eine Vielzahl unterschiedlicher beispielhafter Einzelmodule vorgestellt, die für das erfindungsgemäße Umrichtersystem geeignet sind. Die Vorstellung dieser Einzelmodule ist trotz ihrer Ausführlichkeit als beispielhaft anzusehen und erhebt keinen Anspruch auf Vollständigkeit.

Die Erfindung identifiziert jedoch drei in gewisser Weise generische Modultypen, aus denen sich wiederum unterschiedliche Einzelmodule ableiten lassen. Im Sprachgebrauch der vorliegenden Offenbarung ist ein Einzelmodul aus einem Modultyp ableitbar, wenn es aus dem Modultyp erzeugt werden kann, indem einzelne Schaltelemente des Moduls des jeweiligen Typs entfernt oder durch Leiter derart ersetzt werden, dass die verbleibenden Schaltelemente es dennoch gestatten, dass das Energiespeicherelement mit einem Energiespeicherelement eines benachbarten Moduls wahlweise in Reihe oder parallel geschaltet wird.

Ein erster Modultyp, aus dem bevorzugte Einzelmodule "ableitbar" sind, umfasst Folgendes:
- einen ersten und einen zweiten Leiter,
- ein Energiespeicherelement, das zwischen den ersten und den zweiten Leiter geschaltet ist,
- vier Brückenzweige, die zwischen den ersten und den zweiten Leiter geschaltet sind,
   - wobei jeder Brückenzweig einen Abgriff umfasst, der über ein erstes Schaltelement mit dem ersten Leiter und über ein zweites Schaltelement mit dem zweiten Leiter verbindbar ist, und
   - wobei jeweils einer der mindestens vier Anschlüsse des Einzelmoduls mit einem der Abgriffe der vier Brückenzweige verbunden ist.

Dieser erste Modultyp gestattet, dass jede Klemme mit jedem Eingang des Speicherelementes verbunden wird. Allerdings ist dieser erste Modultyp in der Weise mit Schaltern "überbestückt", als nicht alle acht Schaltelemente für den Betrieb gebraucht werden. Somit können einzelne dieser Schaltelemente entfernt oder kurzgeschlossen werden, ohne die wesentliche Funktion, nämlich die wahlweise Parallel- und Reihenschaltung zu verlieren.

Tatsächlich lassen sich aus dem ersten Modultyp funktionierende Einzelmodule mit nur vier oder sogar nur drei Schaltelementen ableiten. Während das Modul des ersten Typs allerdings in allen vier Quadranten der Strom-Spannungsebene betrieben werden kann, kann ein daraus abgeleitetes Einzelmodul mit beispielsweise lediglich drei Schaltelementen nur noch in zwei Quadraten der Strom-Spannungsebene betrieben werden - ein solches Modul wird im Folgenden als "Zwei-Quadranten-Modul" bezeichnet.

Zwei-Quadranten-Module haben den Nachteil einer eingeschränkten Funktionalität, erlauben aber Schaltelemente einzusparen und können je nach Anwendung eine vorteilhafte Wahl darstellen.

Der zweite generische Modultyp umfasst Folgendes:
- einen ersten und einen zweiten Leiter,
- ein Energiespeicherelement, das zwischen den ersten und den zweiten Leiter geschaltet ist,
- zwei Brückenzweige, die zwischen den ersten und den zweiten Leiter geschaltet sind, wobei
   - jeder Brückenzweig einen ersten Abgriff umfasst, der über ein erstes Schaltelement mit dem ersten Leiter verbindbar ist, einen zweiten Abgriff umfasst, der über ein zweites Schaltelement mit dem zweiten Leiter verbindbar ist, und der erste und der zweite Abgriff über ein drittes Schaltelement miteinander verbindbar sind, und
   - wobei jeweils eine Klemme des ersten Klemmenpaares mit dem ersten bzw. zweiten Abgriff des einen Brückenzweigs, und jeweils eine Klemme des zweiten Klemmenpaares mit dem ersten bzw. zweiten Abgriff des anderen Brückenzweigs verbunden ist.

Auch aus diesem Modultyp lassen sich für die Zwecke der Erfindung geeignete Einzelmodule auf die oben beschriebene Weise ableiten.

Schließlich wird ein dritter Modultyp vorgeschlagen, der Folgendes umfasst:
- einen ersten und einen zweiten Leiter,
- ein Energiespeicherelement, das zwischen den ersten und den zweiten Leiter geschaltet ist,
- einen Brückenzweig, der zwischen den ersten und den zweiten Leiter geschaltet ist,
   - wobei der Brückenzweig einen Abgriff umfasst, der über ein erstes Schaltelement mit dem ersten Leiter und über ein zweites Schaltelement mit dem zweiten Leiter verbindbar ist,
   - wobei die eine Klemme des ersten Klemmenpaares mit dem Abgriff verbunden ist und die andere Klemme des ersten Klemmenpaares über ein drittes Schaltelement mit dem ersten Leiter verbindbar ist,
   - wobei eine Klemme des zweiten Klemmenpaars über ein viertes Schaltelement mit dem ersten Leiter verbindbar ist, und
wobei die andere Klemme des zweiten Klemmenpaars mit dem zweiten Leiter verbunden ist.

Der dritte Modultyp ist nur für den Zwei-Quadranten-Betrieb geeignet, kommt jedoch mit lediglich vier Schaltelementen aus. Wie unten anhand eines Ausführungsbeispiels näher erläutert wird, ist es sogar möglich, aus diesem dritten Modultyp ein funktionsfähiges Einzelmodul mit lediglich drei Schaltelementen abzuleiten.

Es versteht sich, dass für das Umrichtersystem der Erfindung auch solche Einzelmodule verwendet werden können, die sich nicht aus den drei genannten Modultypen ableiten lassen.

### KURZBESCHREIBUNG DER ZEICHNUNGEN

Die voranstehenden und weitere Ziele, Merkmale und Vorteile der vorliegenden Erfindung werden aus der folgenden, detaillierten Beschreibung in Zusammenhang mit den beigefügten Zeichnungen deutlicher, wobei:
- Fig. 1: einen Brückenzweig eines modularen Multilevelkonverters, bestehend aus drei gleichen Zweipolen beschreibt;
- Fig. 2: den möglichen Aufbau eines einzelnen Moduls eines modularen Multilevelkonverters zeigt;
- Fig. 3: ein Phasenmodul eines modularen Multilevelkonverters zeigt, welches aus zwei Brückenzweigen mit je drei gleichen Zweipolen aufgebaut ist;
- Fig. 4: ein System zur Umwandlung einer 1-phasigen Wechselspannung (bzw. einer Gleichspannung) in eine andere 1-phasigen Wechselspannung (bzw. Gleichspannung) zeigt, welches aus zwei zusammengeschalteten Phasenmodulen eines modularen Multilevelkonverters besteht;
- Fig. 5: ein System zur Umwandlung einer 3-phasigen Wechselspannung in eine 1-phasige Wechselspannung bzw. eine Gleichspannung zeigt, welches aus drei zusammengeschalteten Phasenmodulen eines modularen Multilevelkonverters besteht;
- Fig. 6: ein System zur Kopplung eines 3-phasigen Drehstromnetzes mit einem zweiphasigen Netz zeigt, welches aus drei und zwei zusammengeschalteten Phasenmodulen eines modularen Multilevelkonverters besteht;
- Fig. 7: eine Hintereinanderschaltung von drei erfindungsgemäßen Einzelmodulen zeigt, so dass beispielsweise ein Brückenzweig eines Stromrichters gebildet wird;
- Fig. 8: die Schaltzustände Parallelschaltung und Serienschaltung zweier hintereinandergeschalteter erfindungsgemäßer Einzelmodule zeigt;
- Fig. 9: vier verschiedene mögliche Ausführungsformen solcher erfindungsgemäßer Einzelmodule zeigt;
- Fig. 10: mögliche Schaltzustände für die Hintereinanderschaltung von Einzelmodulen gemäß Figur 9c zeigt;
- Fig. 11: ein Phasenmodul bestehend aus zwei Brückenzweigen zeigt, wobei jeder Brückenzweig aus drei gleichen erfindungsgemäßen Einzelmodulen aufgebaut ist;
- Fig. 12: ein System zur Umwandlung einer 1-phasigen Wechselspannung (bzw. einer Gleichspannung) in eine andere 1-phasigen Wechselspannung (bzw. Gleichspannung) zeigt, welches aus zwei zusammengeschalteten Phasenmodulen gemäß Figur 11 besteht;
- Fig. 13: ein System zur Umwandlung einer 3-phasigen Wechselspannung in eine 1-phasige Wechselspannung bzw. eine Gleichspannung zeigt, welches aus drei zusammengeschalteten Phasenmodulen gemäß Figur 11 besteht;
- Fig. 14: ein System zur Kopplung eines 3-phasigen Drehstromnetzes mit einem zweiphasigen Netz zeigt, welches aus drei und zwei zusammengeschalteten Phasenmodulen gemäß Figur 11 besteht;
- Fig. 15: eine Umsetzung der geforderten Eigenschaften eines erfindungsgemäßen Einzelmoduls gemäß Figur 9a unter zusätzlicher Verwendung von Dioden zeigt;
- Fig. 16: eine praktische Realisierung eines erfindungsgemäßen Einzelmoduls gemäß Figur 9a mit Transistoren zeigt;
- Fig. 17: eine weitere praktische Realisierung eines erfindungsgemäßen Einzelmoduls gemäß Figur 9a mit Transistoren zeigt, wobei der zusätzliche Schalter in den Einzelmodulen an Stelle der Klemmen B1 und B2 die Klemmen A1 mit A2 verbinden kann;
- Fig. 18: die zentralen zusätzlichen Strompfade eines erfindungsgemäßen Einzelmoduls gemäß Figur 15 zeigt;
- Fig. 19: eine praktische Realisierung eines erfindungsgemäßen Einzelmoduls gemäß Figur 9b zeigt;
- Fig. 20: eine Zusammenschaltung benachbarter Einzelmodule gemäße Figur 19 zeigt;
- Fig. 21: ein überbestücktes Einzelmodul gemäß Figur 9b zeigt, das über mehr Schaltelemente verfügt, als für den einfachsten Betrieb nötig ist;
- Fig. 21a: eine schematische Darstellung eines ersten Modultyps zeigt,
- Fig. 21b: eine schematische Darstellung eines zweiten Modultyps zeigt,
- Fig. 21c: eine schematische Darstellung eines dritten Modultyps zeigt,
- Fig. 22: eine weitere mögliche Ausführungsform zeigt, die von dem Schaltbild gemäß Figur 21 abgeleitet sind, aber weniger Schaltmöglichkeiten erlaubt;
- Fig. 23: eine weitere mögliche Ausführungsform zeigt, die von dem Schaltbild gemäß Figur 21 abgeleitet sind, aber weniger Schaltmöglichkeiten erlaubt;
- Fig. 24: ein Zwei-Quadranten-Modul des dritten Modultyps zeigt, bei dem die Schaltelemente durch Transistoren gebildet sind,
- Fig. 25 und 26: Einzelmodule zeigen, die aus dem dritten Modultyp von Fig. 21c abgeleitet sind,
- Fig. 27: eine Hintereinanderschaltung von Modulen von Fig. 24 zeigt,
- Fig. 28: eine ähnliche Hintereinanderschaltung wie in Fig. 27, jedoch polaritätsinvers zeigt,
- Fig. 29: ein Zwei-Quadranten-Einzelmodul zeigt, welches sich von dem ersten Modultyp ableiten lässt,
- Fig. 30: dieselbe Topologie zeigt wie Fig. 29, bei der jedoch die Trasnsistoren durch abstrakte Schaltelemente ersetzt wurden,
- Fig. 31: zwei hintereinander geschaltete Module von Fig. 30 zeigt,
- Fig. 32: eine Hintereinanderschaltung zweier Einzelmodule nach Fig. 29 zeigt,
- Fig. 33 und 34: eine Hinterschaltung weiterer Zwei-Quadranten-Module zeigen,
- Fig. 35 - 37: Makrotopologien zeigen, in denen eine Mehrzahl von Zwei-Quadranten-Einzelmodulen verschaltet sind,
- Fig. 38(a) - (d): alternative Energiespeicherelemente zeigen,
- Fig. 39(a) und (b): alternative Energiespeicherelemente zeigen,
- Fig. 40(a) und (b): Einzelmodule zeigen, in welchen die Energiespeicherelemente von Figur 38(c) bzw. 38(d) verwendet werden,
- Fig. 41: ein Einzelmodul zeigt, in welchem das Energiespeicherelement von Figur 39(b) verwendet wird,
- Fig. 42(a) und (b): weitere Ausführungsformen für Energiespeicherelemente zeigen, und
- Fig. 43(a) bis (d): Abschlussmodule für eine Hintereinanderschaltung von Einzelmodulen zeigt.

In den Zeichnungen sollen gleiche Bezugszeichen gleiche Teile, Bauteile und Anordnungen bezeichnen.

### DETAILLIERTE BESCHREIBUNG BEVORZUGTER AUSFÜHRUNGSFORMEN

Die Erfindung basiert auf der Erkenntnis, dass ein Stromrichter, der aus einer Hintereinanderschaltung von mehreren gleichartigen Einzelmodulen aufgebaut werden soll, so auszuführen ist, dass die Energiespeicherelemente dieser Einzelmodule wahlweise parallel oder seriell geschaltet werden können. Dabei kann die Verschaltung der Einzelmodule fest vorgegeben werden, so dass nur über die die internen Schaltelemente wahlweise gesteuert werden kann, ob die Energiespeicherelemente der Einzelmodule paralleles oder in Serie zu schalten sind. Gleichzeitig soll die Topologie der internen Schaltelemente gewährleisten, dass die Spannungsbelastung dieser Schaltelemente nicht wesentlich über der Maximalspannung der Energiespeicherelemente liegt.

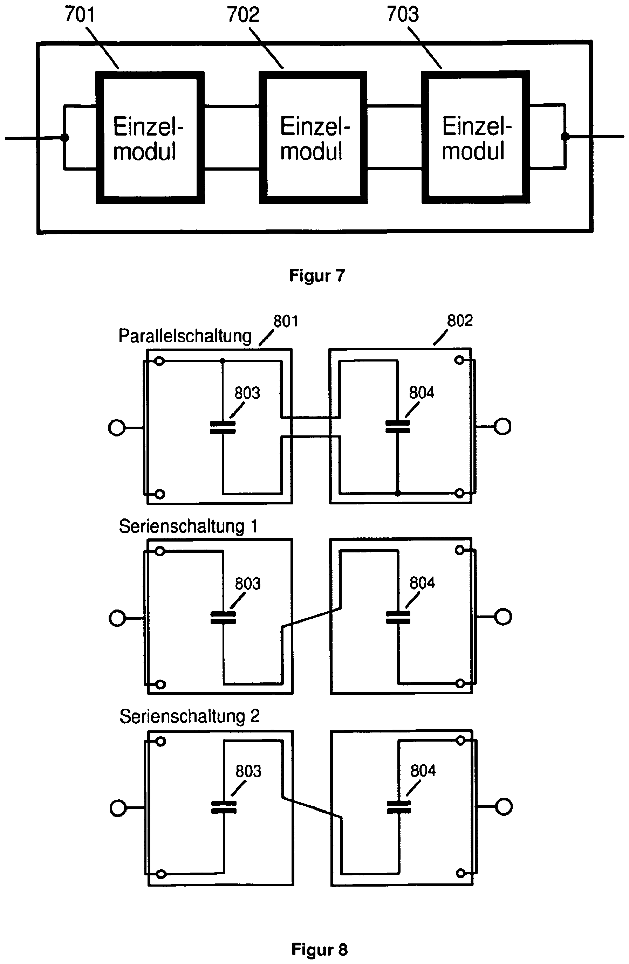

Figur 7 zeigt dabei ein Beispiel einer möglichen externen Verschaltung von drei Einzelmodulen 701, 702 und 703 zu einer Hintereinanderschaltung, so dass beispielsweise ein Brückenzweig eines Stromrichters gebildet wird. Ein Einzelmodul ist dabei jeweils über mindestens zwei Anschlüsse mit dem nachfolgenden Anschluss verbunden, so dass die Energiespeicherelemente eines Einzelmoduls entweder parallel oder in Serie zum Energiespeicherelement des nachfolgenden Einzelmoduls geschaltet werden kann.

Figur 8 zeigt die hierzu geforderten Schaltzustände zweier hintereinandergeschalteter Einzelmodule 801 und 802: Parallelschaltung der beiden Energiespeicherelemente 803, 804 und Serienschaltung der Energiespeicherelemente 803, 804 in zwei möglichen Polaritäten. Diese Verschaltungen sind natürlich auch für eine Parallel- oder Serienschaltung von mehr als zwei Modulen möglich. Zusätzlich sollten die Einzelmodule so ausgeführt sein, dass sie vergleichbare Schaltzustände zu den Zweipolen des beschriebenen Multilevelkonverters erzeugen können. Dies bedeutet insbesondere, dass einzelne Module so geschaltet werden können, dass sie einen Stromfluss von einem vorhergehenden Einzelmodul (oder einem äußeren Anschluss eines Brückenzweigs) zu einem nachfolgenden Einzelmodul (oder einem anderen äußeren Anschluss eines Brückenzweigs) ermöglichen, ohne das eigene Energiespeicherelement in den Vorgang mit einzubinden.

Weiterhin ist es günstig, wenn die Einzelmodule so ausgeführt sind, dass die Anschlüsse des jeweils letzten Klemmenpaars eines äußeren Einzelmoduls einer Hintereinanderschaltung fest miteinander verbunden werden können. Dies ist beispielsweise in Figur 7 für das erste und das letzte der drei Einzelmodule dargestellt. Auf diese Weise kann erreicht werden, dass eine Hintereinanderschaltung von mindestens zwei der neuartigen Einzelmodule ähnlich wie bei der Reihenschaltung von Zweipolen des beschriebenen Multilevelkonverters einen Brückenzweig mit zwei äußeren Anschlüssen bildet.

Da die Verbindung jeweils zweier solcher Einzelmodule gezielt über die entsprechenden Schaltelemente gesteuert werden kann, ist es gemäß der vorliegenden Erfindung möglich, eine Hintereinanderschaltung mehrerer Einzelmodule so zu steuern, dass innerhalb einer solchen Hintereinanderschaltung mindestens eine Serienschaltung von Energiespeicherelementen und eine Parallelschaltung von Energiespeicherelementen gleichzeitig vorliegt.

Das Umschalten der Energiespeicherelemente von Einzelmodulen zu einer Parallelschaltung kann zweckmäßigerweise dann besonders einfach vorgenommen werden, wenn die Spannungen der betreffenden Energiespeicherelemente ähnlich sind. Andererseits kann über die Ansteuerung der entsprechenden Einzelmodule des Stromrichters auch erreicht werden, dass im Verhältnis zur Gesamtzahl der Schaltzyklen nur verhältnismäßig selten auf eine entsprechende Parallelschaltung umgeschaltet wird. Beispielsweise könnte ein mit 100 kHz getakteter Umrichter zur Erzeugung einer Wechselspannung von 50 Hz nur alle 10 oder 20 ms entsprechende Module in den Parallelbetrieb schalten, während für die Schaltzyklen der 100 kHz Taktung alle 10 Mikrosekunden geschaltet werden muss.

Alternativ kann eine Parallelschaltung der Energiespeicherelemente bei unterschiedlichen Spannungen aber auch so vorgenommen werden, dass vor dem Parallelschalten zunächst ein Ladungs- und Spannungsausgleich vorgenommen wird. Hierzu ist es zweckmäßig, noch zusätzliche Ausgleichsglieder jeweils zwischen zwei Einzelmodule zu schalten, die eine Zwischenspeicherung eines Teils der Energie der Energiespeicherelemente erlauben. Insbesondere können solche Ausgleichsglieder Induktivitäten enthalten.

Um Einzelmodule, wie sie für die vorliegende Erfindung benötigt werden, zu erhalten, muss bei jedem Einzelmodul auf beiden Anschlussseiten ein getrennter Zugang zu den beiden Anschlüssen des Energiespeicherelementes im Inneren geschaffen werden. Dies kann so geschehen, dass mehrere Module hintereinander mit je zwei Anschlüssen verbunden werden können und so die Energiespeicherelemente der Module wahlweise seriell oder parallel betrieben werden können. Damit kann ein modifizierter Multilevelkonverter aufgebaut werden, bei dem die ursprünglichen Zweipole durch Einzelmodule mit mindestens vier Anschlüssen ersetzt werden. Diese Anschlüsse bilden beispielsweise ein erstes und ein zweites Klemmenpaar.

Ein solches Einzelmodul mit genau vier Anschlüssen kann auch als ein sogenanntes Zweitor betrachtet werden. Ein Zweitor ist dabei definiert als ein vierpoliges Modul mit zwei Klemmenpaaren A1, A2 bzw. B1, B2, welche jeweils ein sogenanntes Tor bilden und wobei der Strom durch jeweils ein Klemmenpaar gegengleich ist. Insbesondere ist das dabei entstehende Zweitor aktiv und nichtlinear.

Durch das oben beschriebene Aufbrechen des ursprünglich zweipoligen Moduls wird der erste Anschluss zum Klemmenpaar A1, A2 und der zweite Anschluss zum Klemmenpaar B1, B2. Jedes Modul enthält damit mehrere Schaltelemente, über welche der interne Energiespeicher mit den Anschlüssen A1, A2, B1 und B2 verbunden werden kann. Insbesondere sollen die Schalter folgende voneinander unabhängige Schaltzustände erzeugen können:
- Verbinden oder Nicht-Verbinden der Klemme A1 mit dem ersten Anschluss des Energiespeichers
- Verbinden oder Nicht-Verbinden der Klemme A2 mit dem zweiten Anschluss des Energiespeichers
- Verbinden oder Nicht-Verbinden der Klemme B1 mit dem ersten Anschluss des Energiespeichers
- Verbinden oder Nicht-Verbinden der Klemme B2 mit dem zweiten Anschluss des Energiespeichers

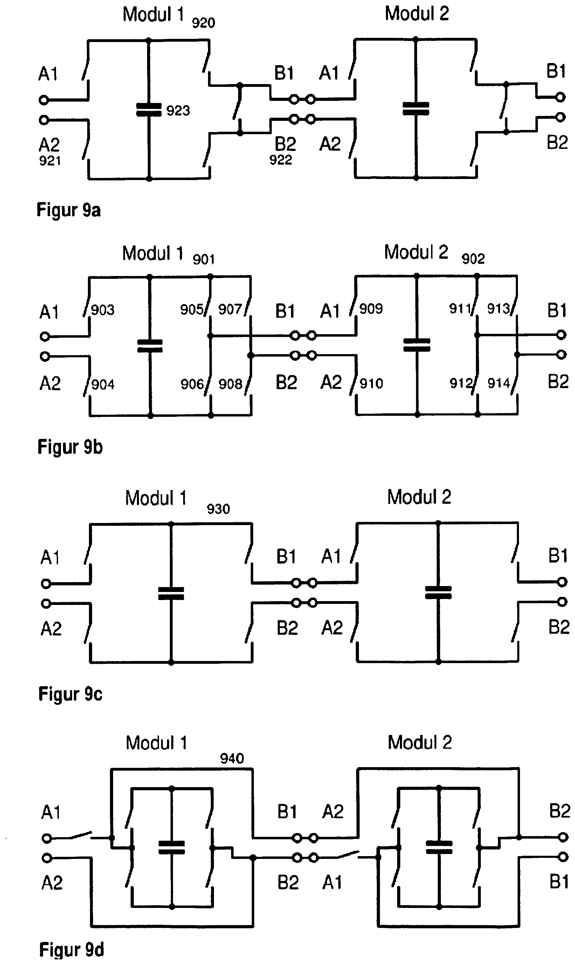

Die Figuren 9a, 9b, 9c und 9d zeigen vier verschiedene mögliche Ausführungsformen solcher Einzelmodule, die ein Zweitor bilden. Mehrere gleichartige Einzelmodule werden hintereinander geschaltet (in Figur 9 sind beispielhaft jeweils zwei Module hintereinandergeschaltet). Dabei hat die Verschaltung so zu erfolgen, dass die Klemmen hintereinandergeschalteter Zweitore in folgender Weise miteinander verbunden werden müssen:
Verbindung der Klemme B1 des ersten Moduls mit der Klemme A1 des nachfolgenden Moduls und Verbindung der Klemme B2 des ersten Moduls mit der Klemme A2 des nachfolgenden Moduls für die drei Ausführungsformen gemäß Figur 9a, 9b und 9c.

Für die Ausführungsform gemäß Figur 9d gilt dagegen:
Verbindung der Klemme B1 des ersten Moduls mit der Klemme A2 des nachfolgenden Moduls und Verbindung der Klemme B2 des ersten Moduls mit der Klemme A1 des nachfolgenden Moduls.

Zwei oder mehrere hintereinandergeschalteten Zweitore können dabei bzgl. ihrer jeweiligen Energiespeicher allein über entsprechende Ansteuerung ihrer Schalter entweder parallel oder in Reihe geschaltet werden. Dies kann durch folgende prinzipielle Schaltzustände erreicht werden:
Der erste Anschluss des Energiespeichers des ersten Zweitors wird mit dem ersten Anschluss des Energiespeichers des nachfolgenden Zweitors verbunden und der zweite Anschluss des Energiespeichers des ersten Zweitors wird mit dem zweiten Anschluss des Energiespeichers des nachfolgenden Zweitors verbunden (z.B. Schließen der Schalter 905, 909, 908 und 910 in Figur 9b). Wenn nun gleichzeitig die Klemme A1 des ersten Zweitors ebenfalls mit dem ersten Anschluss des zugehörigen Energiespeichers verbunden wird (z.B. Schließen des Schalters 903 in Figur 9b) und die Klemme B2 des letzten so verschalteten Zweitors ebenfalls mit dem zweiten Anschluss des zugehörigen Energiespeichers verbunden wird (z.B. Schließen des Schalters 914 in Figur 9b), liegt sozusagen eine Parallelschaltung von zwei oder mehreren Zweitoren vor. Dabei ist es zweckmäßig, die Klemmen A1 und A2 des ersten Zweitors miteinander zu verbinden und auch die Klemmen B1 und B2 des letzten so verschalteten Zweitores miteinander zu verbinden.

Oder die hintereinandergeschalteten Zweitore werden so geschaltet, dass:
Der erste Anschluss des Energiespeichers des ersten Zweitors mit dem zweiten Anschluss des Energiespeichers des nachfolgenden Zweitors verbunden wird (z.B. Schließen der Schalter 907 und 910 in Figur 9b). Wenn nun gleichzeitig die Klemme A2 des ersten Zweitors mit dem zweiten Anschluss des zugehörigen Energiespeichers verbunden wird (z.B. Schließen des Schalters 904 in Figur 9b) und die Klemme B1 des letzten so verschalteten Zweitors ebenfalls mit dem ersten Anschluss des zugehörigen Energiespeichers verbunden wird (z.B. Schließen des Schalters 911 in Figur 9b), liegt sozusagen eine Reihenschaltung Energiespeicherelemente der Zweitore vor, wobei auf diese Weise beliebig viele Zweitore verschaltet werden können. Dabei dürfen alternativ auch die Klemme A1 und A2 des ersten Zweitors miteinander verbunden werden und es dürfen auch die Klemmen B1 und B2 des letzten so verschalteten Zweitores miteinander verbunden werden. Die Polarität der Reihenschaltung kann auch umgekehrt werden, wenn sinngemäß jeweils der "erste Anschluss" und der "zweite Anschluss", sowie "A1" und "A2", und "B1" und "B2" vertauscht werden.

Weiterhin können erfindungsgemäss bei Verwendung von mindestens drei Zweitoren innerhalb eines Brückenzweiges auch Parallelschaltungen und Reihenschaltungen von Energiespeicherelementen der Einzelmodule gleichzeitig vorgenommen werden. Die äquivalenten Schaltzustände der Energiespeicherelemente gemäß der Schaltungen aus Figur 9a, 9c und 9d können durch entsprechendes Öffnen und Schließen ihrer Schalter ebenfalls erreicht werden.

Die Ausführungsform gemäß Figur 9c benötigt nur vier Schalter pro Einzelmodul, gestattet aber in der Serienschaltung von Energiespeicherelementen nicht mehr eine freie Wahl der Spannungsrichtung. Damit wird bei dieser Ausführungsform der Einsatz von polarisierten Energiespeicherelementen, wie z.B. Akkumulatoren oder Elektrolytkondensatoren erschwert. Bei den anderen gezeigten Ausführungsformen kann dagegen die Polarität der Energiespeicherelemente unabhängig von der externen Modulspannung gewählt werden. Weiterhin ist es bei der Ausführungsform gemäß Figur 9c sinnvoll für jeden Brückenzweig eine ungerade Anzahl von Einzelmodulen einzusetzen, um jeweils die beiden Klemmen der randständigen Einzelmodule wieder miteinander verbinden zu können.

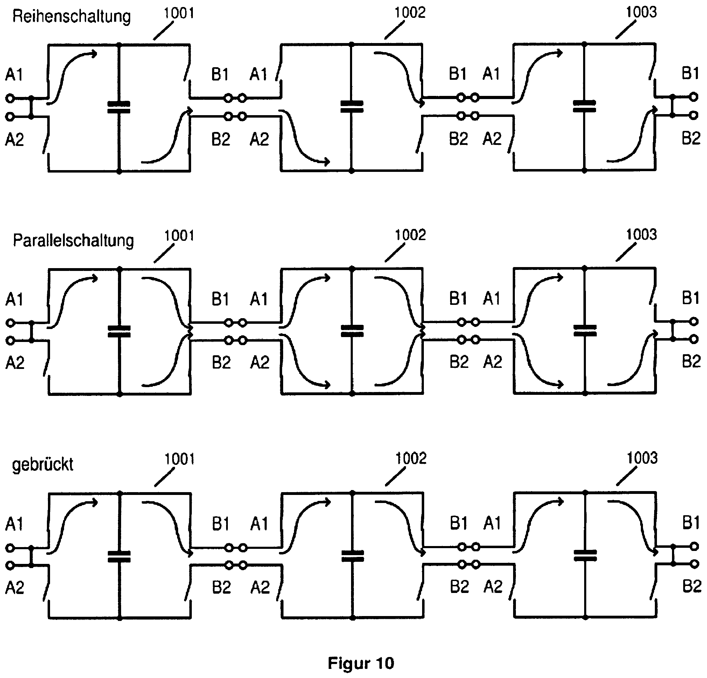

Figur 10 zeigt mögliche Schaltzustände für die Hintereinanderschaltung von drei Einzelmodulen 1001, 1002 und 1003 gemäß Figur 9c.

Insbesondere bei den Einzelmodulen gemäß Figur 9d können die Einzelmodule als eine Kombination von vierquadranten-geschalteten Zweipolen mit einem Energiespeicherelement und einem zusätzlichen Schaltelement an einer Eingangs- oder Ausgangsklemme betrachtet werden. Damit bildet auch ein solches Einzelmodul wiederum ein Zweitor, wobei eine Eingangsklemme mit einer Ausgangsklemme dauerhaft verbunden ist (z.B. in Figur 9d die Klemmen A2 und B2 jedes Einzelmoduls). Bezüglich ihrer äußeren Verschaltung unterscheiden sich diese Einzelmodule von den in den Figuren 9a, 9b und 9c gezeigten Alternativen lediglich darin, dass die Klemmen hintereinandergeschalteter Zweitore jeweils mit vertauschten Anschlüssen miteinander verbunden werden müssen:
Verbindung der Klemme B1 des ersten Moduls mit der Klemme A2 des nachfolgenden Moduls und Verbindung der Klemme B2 des ersten Moduls mit der Klemme A1 des nachfolgenden Moduls.

Die dargestellten Ausführungsformen stellen Beispiele möglicher Verschaltungen der Energiespeicherelemente und der zugehörigen Schalter dar, erheben aber keinen Anspruch auf Vollständigkeit. Insbesondere können die Einzelmodule noch mit weiteren Schaltern ausgestattet werden um die gleichen beschriebenen Schaltzustände zu erreichen. Weiterhin können für die Realisierung der vorliegenden Erfindung auch Einzelmodule verwendet werden, die mehr als zwei elektrische Verbindungen zwischen den Einzelmodulen aufweisen.

### Verschaltung mehrerer Module zu einem Umrichter:

Ein ein- oder mehrphasiger Umrichter kann erfindungsgemäß aufgebaut werden, indem jeder Brückenzweig, wie er beispielhaft mit 3 Einzelmodulen in Figur 7 dargestellt ist, aus mehreren hintereinandergeschalteten dieser Zweitore zusammengesetzt wird. Dabei werden jeweils die Ausgangs-Klemmen B1 und B2 eines Zweitors mit den Eingangsklemmen A1 und A2 (oder vertauscht A2 und A1) verbunden. Die jeweiligen Anschlussklemmen eines Brückenzweiges werden entweder durch eine eingangsseitige Klemme A1 oder A2 (wobei beide Klemmen A1 und A2 alternativ auch verbunden sein können) des ersten Moduls im Brückenzweig bzw. durch eine ausgangsseitige Klemme B1 oder B2 (wobei beide Klemmen B1 und B2 alternativ auch verbunden sein können) des letzten Moduls im Brückenzweig gebildet.

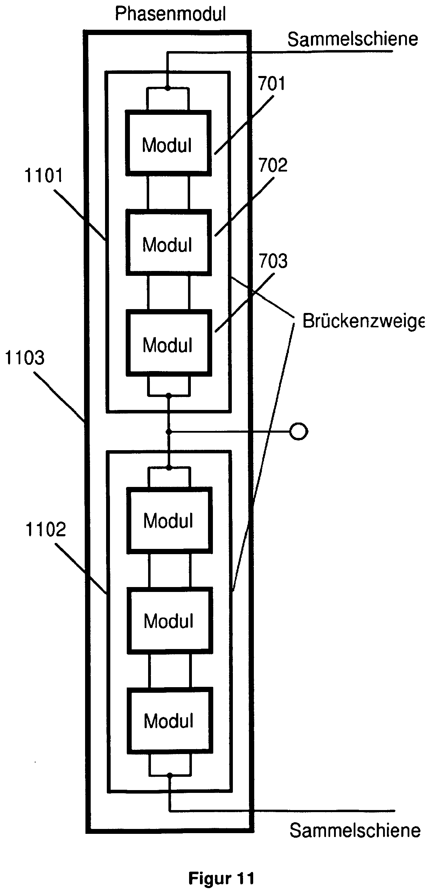

Entsprechend kann gemäß Figur 11 ein Phasenmodul 1103 aus zwei Brückenzweigen 1101 und 1102 aufgebaut werden, wobei die Brückenzweige aus Einzelmodulen 701, 702 und 703 aufgebaut sind. Ähnlich wie beim beschriebenen Multilevelkonverter, bilden diese Phasenmodule, deren obere und untere Anschlüsse mit einer gemeinsamen Sammelschiene verbunden sind, die Grundbausteine eines ein- oder mehrphasigen Umrichters.

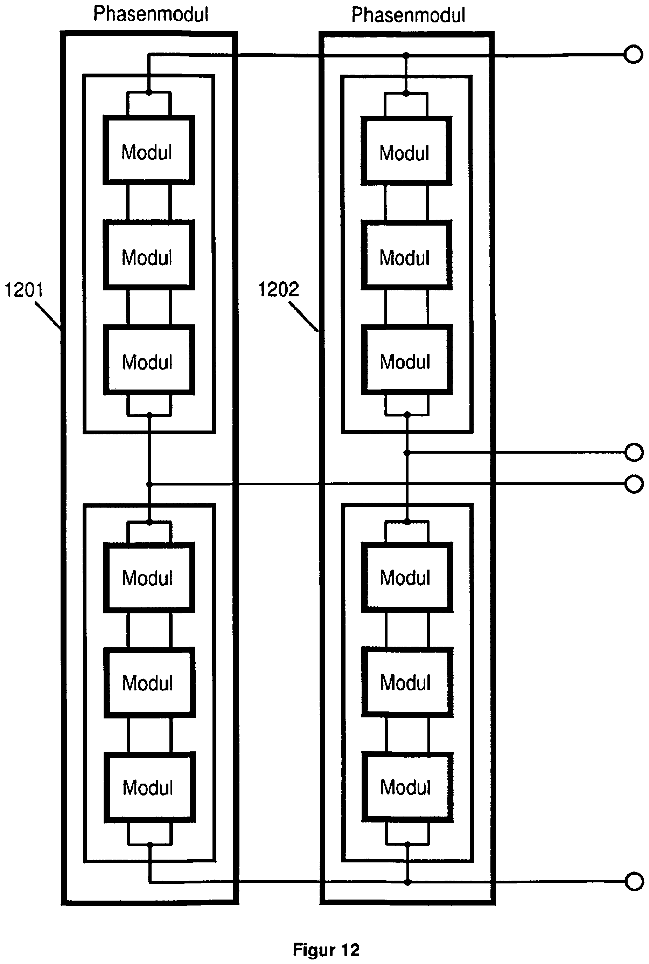

Durch zwei zusammengeschaltete Phasenmodule 1201, 1202 gemäß Figur 12 entsteht wieder ein System zur Umwandlung einer einphasigen Wechselspannung bzw. Gleichspannung in eine andere einphasige Wechselspannung bzw. Gleichspannung. Der Aufbau eines solchen Systems ist dabei wieder vollkommen symmetrisch bezüglich der Ein- bzw. Ausgänge und ermöglicht somit gegenüber jedem Anschlusspaar einen vollständigen Vierquadrantenbetrieb. Weiterhin kann sowohl eingangsseitig aus auch ausgangsseitig des Verhalten des Stromrichters bzgl. induktivem oder kapazitivem Verhalten individuell angepasst werden. Der Energiefluss ist somit auch in beide Richtungen möglich und kann dynamisch verändert werden.

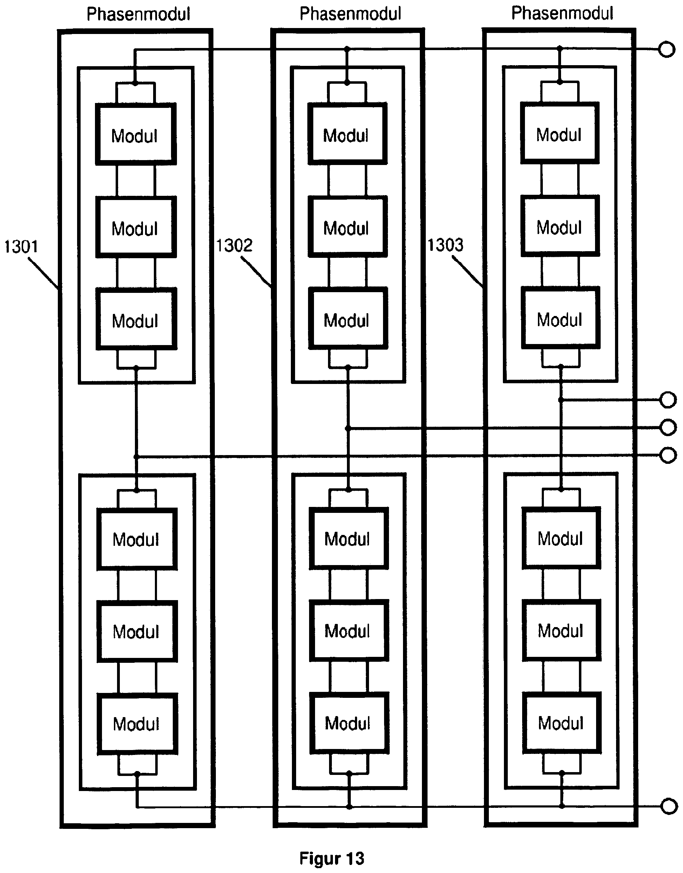

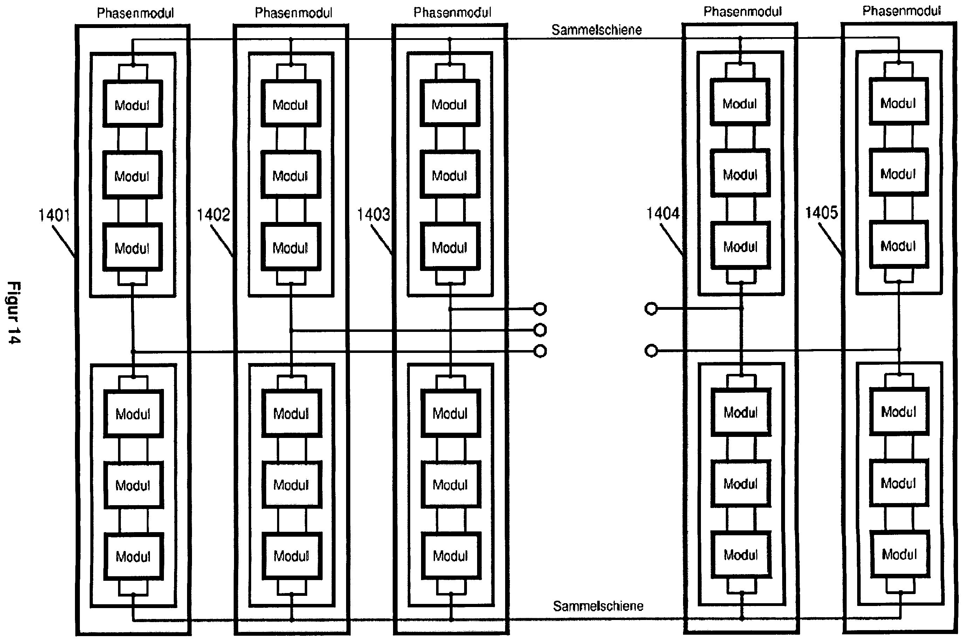

Weiterhin kann beispielsweise durch drei zusammengeschaltete Phasenmodule 1301, 1302, 1303 gemäß Figur 13 ein System zur Umwandlung einer 3-phasigen Wechselspannung in eine 1-phasige Wechselspannung bzw. eine Gleichspannung realisiert werden. Die zusammengefassten Anschlüsse der Phasenmodule können auch als sogenannte (Gleichspannungs-) Sammelschiene betrachtet werden, so dass durch Zusammenschalten von n + m Phasenmodulen eine Netzkupplung für die Kopplung eines n-phasiges Netzes mit einem m-phasigen Netz entsteht. In Figur 14 ist beispielhaft die Zusammenschaltung von 5 Phasenmodulen 1401 bis 1405 dargestellt, um eine Kopplung eines 3-phasigen Drehstromnetzes mit einem zweiphasigen Netz zu realisieren.

Das vorgeschlagene Design zur Kombination mehrerer Module muss zudem nicht auf identischen Modulen basieren. Sofern die Steuerung dies berücksichtigt, können auch Module dieser Topologie mit den Vorschlägen aus den ursprünglichen Anmeldungen (DE10217889) kombiniert werden (also entsprechende 2-Pole), um nur einem bestimmten Teil von Modulen die Parallelschaltung zu ermöglichen. Weiterhin können, je nach Anforderung an den Umrichter, die Kapazitäten der Energiespeicherelemente und die Stromtragfähigkeiten der Schalter der Einzelmodule den Gegebenheiten individuell angepasst werden.

Weiterhin kann es zweckmäßig sein, wenn innerhalb eines Phasenmoduls jeweils einer der beiden Brückenzweige durch einen einfachen (vorzugsweise elektronischen) Schalter ersetzt wird.

Für den weiteren Weg existieren mehrere Alternativen zur genauen Ausführung und Anwendungsweise der neuen Module.

### Aufbau von Einzelmodulen mit elektronischen Schaltern

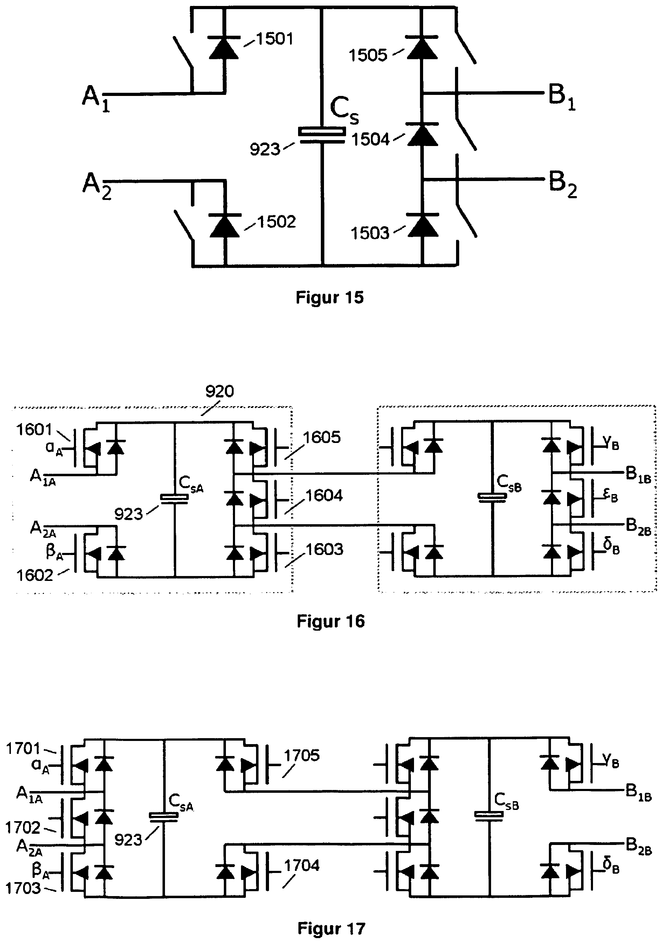

Eine einfache Umsetzung der geforderten Eigenschaften eines Einzelmoduls gemäß Figur 9a kann zweckmäßigerweise durch die zusätzliche Verwendung von Dioden 1501 bis 1505 gemäß Figur 15 als eine mögliche Ausführungsform realisiert werden. Über die jeweiligen Dioden wird die Spannung an den Klemmenpaaren auf die Kondensatorspannung Uc auch bei offenen Schaltern begrenzt. Das weitere Schaltelement, welches die Anschlüsse B1 mit B2 verbinden kann, zwingt im Falle eines Halbleiterschalters mit Freilaufdiode zudem inhärent die nötige Potentialbedingung für diesen Betriebsfall auf. Somit wird über die Schaltelemente der jeweiligen Verbindung sowohl die bekannte serielle als auch eine Parallelschaltung benachbarter Einzelmodule möglich, um beispielsweise die Strombelastbarkeit zu steigern. Eine praktische Realisierung zweier solcher Einzelmodule mit je 5 Transistoren 1601 bis 1605 ist in Figur 16 dargestellt. Alternativ kann der zusätzliche Schalter in den Einzelmodulen an Stelle der Klemmen B1 und B2 auch die Klemmen A1 mit A2 verbinden. Figur 17 stellt ein solches Einzelmodul mit den 5 Transistoren 1701 bis 1705 dar, wobei der Transistor 1702 die beiden Klemmen A1 und A2 verbinden kann.

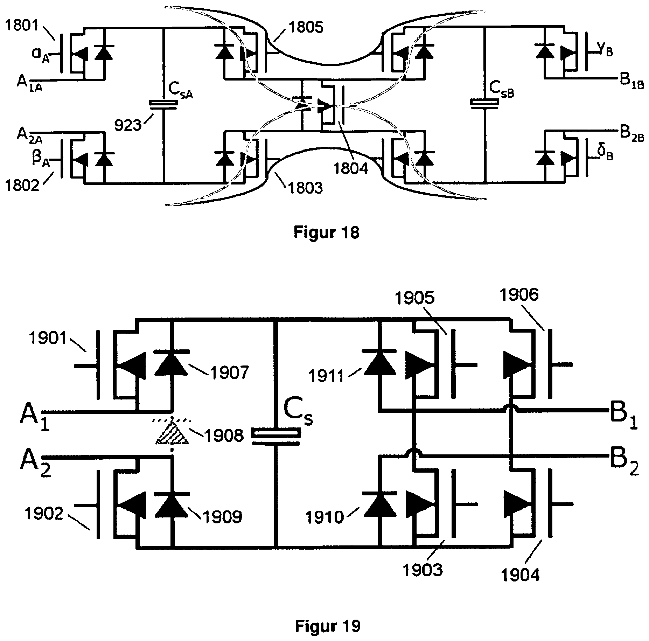

Die zentralen zusätzlichen Strompfade sind in Figur 18 dargestellt. Im Vergleich zum beschriebenen Konzept des modularen Multilevelkonverters ist also ein weiteres Schaltelement pro Einzelmodul notwendig, das lediglich auf die Spannungslevel der Einzelmodule abgestimmt sein muss.

Alle Schaltelemente können beispielsweise als Transistoren (beispielsweise MOSFET oder auch IGBT) oder andere Halbleiterschalter ausgeführt und durch Parallelisierung in der Stromtragfähigkeit verbessert werden. Für den zusätzlichen Leistungsschalter, der die beiden Anschlussleitungen zum benachbarten Modul verbindet, muss ausdrücklich kein Element verwendet werden, das auch aktiv Ströme unterbrechen kann. Da die Unterbrechung durch eines der anderen Elemente erfolgen kann, sind daher hier auch einfache selbstlöschende Leistungshalbleiter (wie z.B. Thyristoren und Triacs) einsetzbar, die insbesondere für das Einsatzgebiet bei hohen Strömen und Spannungen preislich deutlich günstiger im Vergleich zu beispielsweise IGBT ausfallen. Insbesondere muss dieses zusätzliche Schaltelement nicht notwendigerweise im schnellen PWM-Betrieb arbeiten, da es nur für die Parallel- oder Serienschaltung einzelner Module eingesetzt werden kann.

Die beiden Anschlusspaare der randständigen Einzelmodule lassen sich, sofern die Ein- und Ausgangssysteme keine Vorteile aus der Trennung der beiden Leitungen ziehen können, einfach zusammenschließen. Gegebenenfalls können Quellen und Verbraucher jedoch durch eine innovative Dioden- oder Transistorbeschaltung diese zusätzliche Einrichtung positiv einsetzen.

Weiterhin können die randständigen Einzelmodule sich auch von den übrigen Einzelmodulen dadurch unterscheiden, dass sie auf einer Seite nur einen Anschluss aufweisen. Somit können die eingangs-randständigen Einzelmodule bereits die beiden Eingänge A1 und A2 verbinden. Die ausgangs-randständigen Einzelmodule können ausgangseitig ebenfalls nur einen Anschluss aufweisen und benötigen (gegenüber den Ausführungsformen von Figur 16 ausgangsseitig nur 2 Schaltelemente (Verbinden der beiden Ausgänge B1 und B2).

Zwar erfordert dieses vorgeschlagene Schaltungsdesign zur Realisierung der Einzelmodule gemäß Figur 9a nur einen minimalen Mehraufwand an Material, um die dargestellten Vorteile zu erreichen, jedoch lassen zwei Eigenschaften - die Nachteile zu nennen ungerecht erschiene - über weitere Wege zu diesem Ziel nachdenken.

Im Falle der Serienschaltung benachbarter Module fließt der gesamte Strom durch den die beiden Anschlussleitungen verbindenden Schalter, die übrigen Halbleiter sind stets, in allen Zuständen (abgesehen von den leicht entlastenden Dioden) vom vollen Strom durchflossen. Eine getrennte Dimensionierung der Schalter für den Parallel- und den Seriellfall ist gemäß der Schaltung in Figur 9a nicht möglich (je nach Auslastung wird allerdings der Querverbindungsschalter thermisch schwächer belastet).

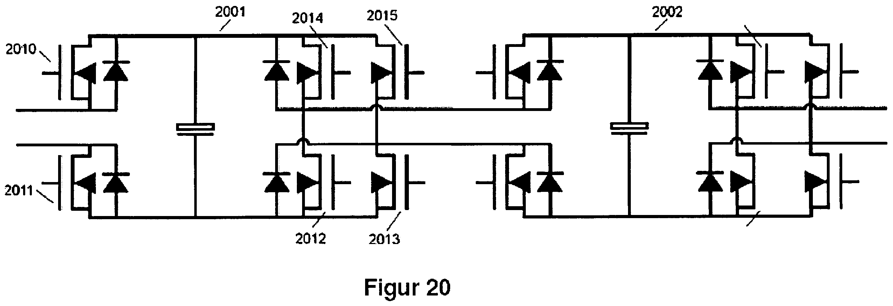

Der Schalter aus der Schaltung gemäß Figur 9a tritt in der Seriellschaltung ausnahmslos mit einem anderen Transistor in Aktion, um die beiden Verbindungsschienen zusammenzuschließen. Werden jedoch die beiden Wege auf die Verbindungsschienen zum Energiespeicherelement direkt als Halbleiterschalter ausgeführt, bleibt die Funktion und die äußere Verbindungsstruktur vorhanden, jedoch bekommen die Transistoren nun eine dedizierte Funktion. Damit ergibt sich eine Struktur der Einzelmodule gemäß Figur 9b. Figur 19 zeigt einen solchen Aufbau unter Verwendung von 6 Transistoren 1901 bis 1906 und zusätzlichen Dioden 1907 bis 1911, Figur 20 zeigt die Zusammenschaltung zweier benachbarter Einzelmodule 2001, 2002.

Auf der freihängenden Seite kann dieser Entwurf ebenso wie die Alternative mit einer Diode im Modul selbst abgeschlossen werden, um die (skleronome) Potentialzwangsbedingung der Verbindungsschienen auch im Fehlerfall sicherzustellen.

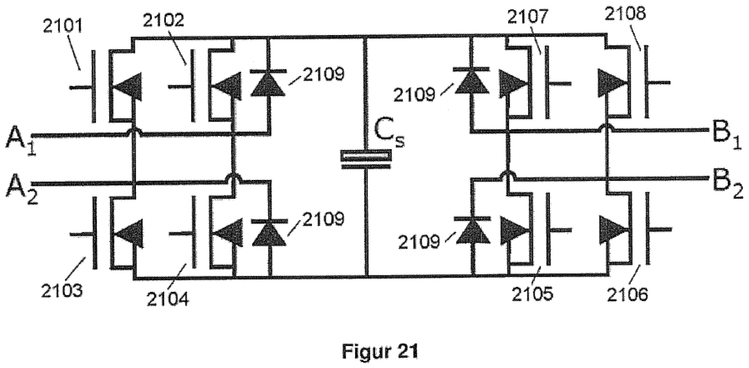

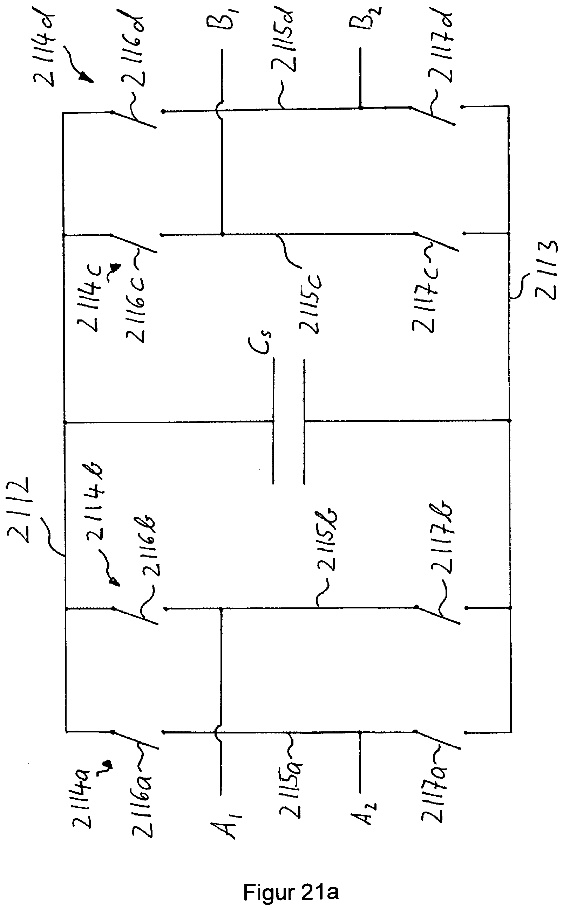

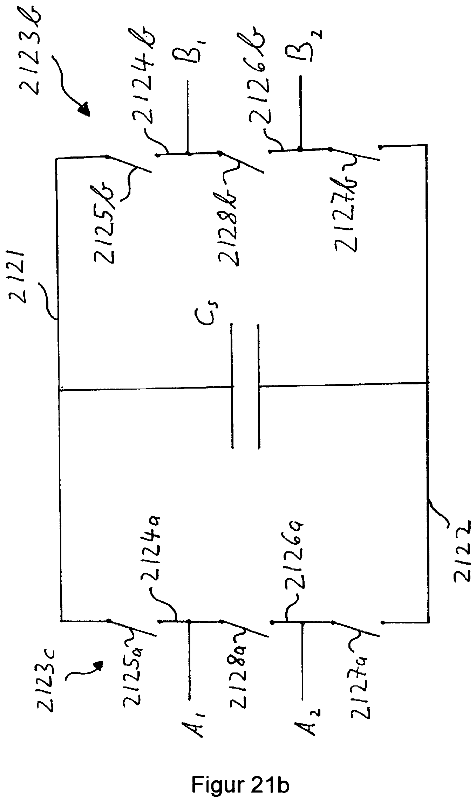

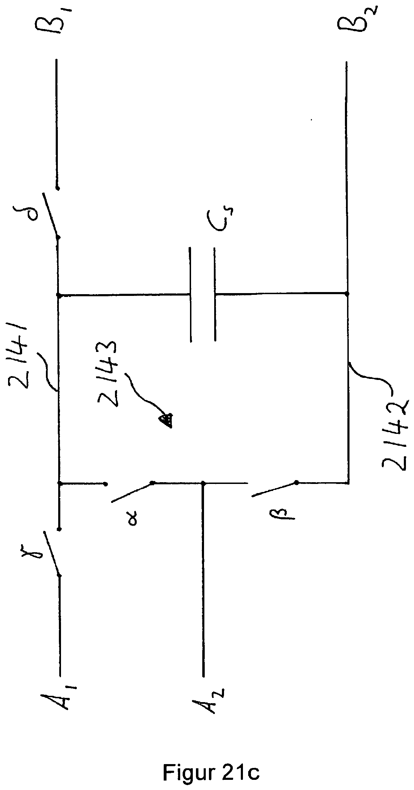

Figur 21 stellt ein überbestücktes Einzelmodul mit 8 Transistoren 2101 bis 2108 und 4 Dioden 2109 dar, das über mehr Schaltelemente verfügt, als für den einfachsten Betrieb nötig ist.

Fig. 21a zeigt eine alternative Darstellung des Moduls von Fig. 21, in dem die Transistoren durch einfache Schaltersymbole ersetzt und die Dioden 2109 weggelassen wurden. Wie aus Fig. 21 und 21a ersichtlich ist, lässt sich mit diesem Aufbau jede Klemme A₁, A₂, B₁ und B₂ mit jedem Eingang des Kondensators verbinden. Das Einzelmodul ist jedoch in dem Sinne "überbestückt", dass nicht sämtliche Transistoren 2101 - 2108 bzw. Schalter benötigt werden, um die gewünschte Funktion, insbesondere die wahlweise Reihen- oder Parallelschaltung des Kondensators zu erreichen. Allerdings sollte die vergleichsweise große Anzahl der gezeigten Schaltelemente nicht darüber hinweg täuschen, dass in der Praxis - zumindest bei Anwendungen für höhere Stromstärken - ohnehin jeder in den hier vorgestellten Modulen einzeln dargestellte Transistor durch eine Mehrzahl parallel geschalteter Transistoren gebildet sein wird, die synchron geschaltet werden, um die nötige Kanalbreite für den Stromfluss bereitzustellen. Wenn also beispielsweise von zwei in Fig. 21 bzw. 21a parallel geschalteten Schaltelementen auf eines verzichtet werden kann, muss dies in der Praxis nicht bedeuten, dass tatsächlich ein Transistor eingespart wird, sondern lediglich die individuelle Ansteuerungsfähigkeit eines Transistors (oder einer Gruppe von Transistoren).

### Erster Modultyp

Der Modultyp von Fig. 21a wird im Folgenden als "erster Modultyp" bezeichnet . Er besteht aus einem ersten Leiter 2112 und einem zweiten Leiter 2113, einem Energiespeicherelement, im vorliegenden Fall dem Kondensator Cs, das zwischen den ersten und den zweiten Leiter 2112, 2113 geschaltet ist, und vier Brückenzweigen 2114a - 2114d, die ebenfalls zwischen den ersten und den zweiten Leiter 2112, 2113 geschaltet sind. Die "Brückenzweige" 2114a - 2114d des ersten Modultyps sind hierbei nicht mit den "Brückenzweigen" der Umrichterschaltung als Ganzes zu verwechseln.

Jeder Brückenzweig 2114a - 2114d umfasst einen zugehörigen Abgriff 2115a - 2115d, der über ein zugehöriges erstes Schaltelement 2116a - 2116d mit dem ersten Leiter 2112 und über ein zugehöriges zweites Schaltelement 2117a - 2117d mit dem zweiten Leiter 2113 verbindbar ist. Schließlich ist jeweils einer der mindestens vier Anschlüsse A₁, A₂, B₁ und B₂ mit jeweils einem der Abgriffe 2115a - 2115d verbunden.

Aus diesem ersten Modultyp ist eine Vielzahl von für die Zwecke der Erfindung geeigneten Einzelmodulen ableitbar. Dabei bedeutet der Begriff "ableitbar", dass das konkrete Einzelmodul aus dem allgemeinen ersten Modultyp von Fig. 21a derart abgeleitet werden kann, dass einzelne Schaltelemente des Moduls kurzgeschlossen oder entfernt werden, die verbleibenden Schaltelemente es jedoch weiterhin gestatten, dass das Energiespeicherelement mit einem Energiespeicherelement eines benachbarten Moduls wahlweise in Reihe oder parallel geschaltet wird. Dies gilt beispielsweise für die Einzelmodule von Fig. 9b, Fig. 19 und Fig. 20.

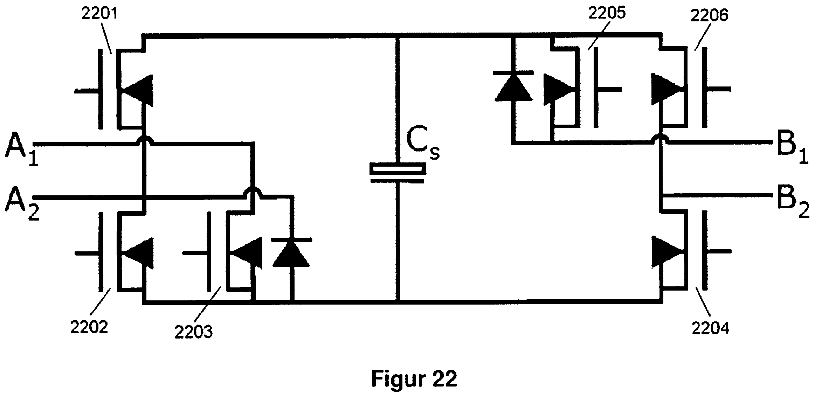

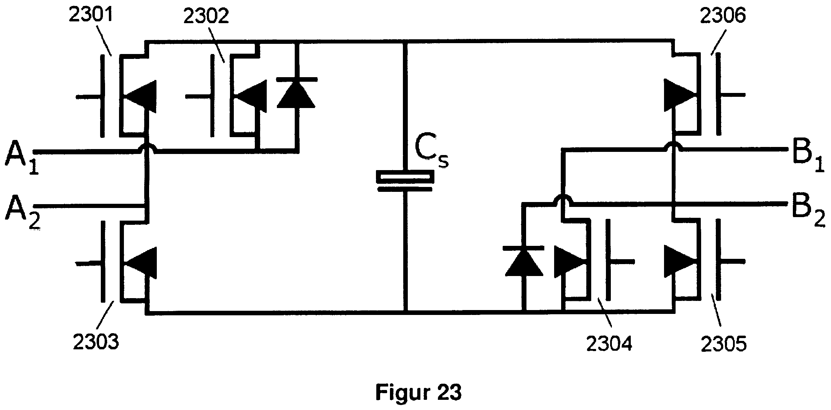

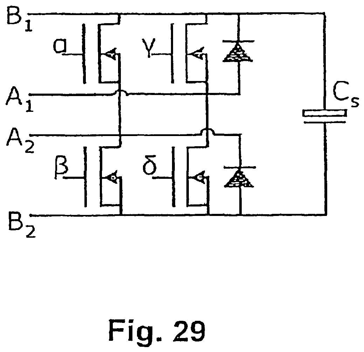

Fig. 22 und 23 zeigen weitere Einzelmodule, die sich auf die beschriebene Weise von dem ersten Modultyp von Fig. 21a ableiten lassen. Allen diesen aus dem ersten Modultyp abgeleiteten Einzelmodulen ist gemein, dass sich die Energiespeicherelemente wahlweise in Reihe oder parallel schalten lassen. Ferner gestatten es diese abgeleiteten Einzelmodule, das Energiespeicherelement von dem Stromfluss abzukoppeln, d. h. einen Stromfluss durch das betreffende Einzelmodul, ohne dass dabei Strom durch das Energiespeicherelement selbst, hier den Kondensator fließt bzw. ohne dass es dabei zu einer Energieaufnahme oder -abgabe durch das Speicherelement kommt. Weitere Beispiele von Einzelmodulen, die von dem Modultyp 1 von Fig. 21a ableitbar sind, werden unten unter Bezugnahme auf Fig. 29 - 32 näher beschrieben.

### Zweiter Modultyp

Fig. 21b zeigt die Schaltungsanordnung für einen zweiten Modultyp, aus dem ebenfalls erfindungsgemäße Einzelmodule abgeleitet werden können. Der zweite Modultyp umfasst ebenfalls einen ersten und einen zweiten Leiter 2121, 2122, ein Energiespeicherelement (Kondensator C_{S}) und zwei Brückenzweige 2123a, 2123b, die zwischen den ersten und den zweiten Leiter 2121, 2122 geschaltet sind. Abweichend von dem ersten Modultyp von Fig. 21a enthält hier jedoch jeder Brückenzweig 2123a/b zwei Abgriffe, nämlich einen ersten Abgriff 2124a/b, der über ein erstes Schaltelement 2125a/b mit dem ersten Leiter 2121 verbindbar ist, und einen zweiten Abgriff 2126a/b, der über ein zweites Schaltelement 2127a/b mit dem zweiten Leiter 2122 verbindbar ist. Schließlich enthält jeder Brückenzweig 2123a/b ein drittes Schaltelement 2128a/b, über das der erste und der zweite Abgriff 2124a/b, 2126a/b miteinander verbindbar sind.

Jeweils eine Klemme A₁, A₂ des ersten Klemmenpaares ist mit dem ersten bzw. zweiten Abgriff 2124a, 2126a des ersten Brückenzweigs 2123a verbunden. Ebenso ist jeweils eine Klemme B₁, B₂ des zweiten Klemmenpaares mit dem ersten bzw. zweiten Abgriff 2124b, 2126b des zweiten Brückenzweigs 2123b verbunden.

Auch der zweite Modultyp gestattet die wahlweise Reihen- und Parallelschaltung des Energiespeicherelements C_{S}, die Trennung des Energiespeicherelement C_{S} vom Stromfluss (auch als "Bypass" oder "Null-Volt-Modus" bezeichnet) und darüber hinaus den Betrieb in allen vier Quadranten der Strom-Spannungsebene. Auch aus dem zweiten Modultyp sind weitere erfindungsgemäße Einzelmodule ableitbar, indem einzelne Schaltelemente entfernt oder durch Leiter ersetzt werden, wobei die verbleibenden Schaltelemente es jedoch immer noch gestatten, dass das Energiespeicherelement mit einem Energiespeicherelement eines benachbarten Moduls wahlweise in Reihe oder parallel geschaltet wird. Beispiele für Einzelmodule, die von dem zweiten Modultyp von Fig. 21b ableitbar sind, wurden bereits in Fig. 9a, Fig. 15, 16 und 17 gezeigt.

Während die Module des ersten und des zweiten Typs sowie eine Reihe davon abgeleiteter Einzelmodule den Betrieb in allen vier Quadranten der Strom-Spannungs-Ebene gestatten, können auch solche Einzelmodule abgeleitet werden, die zwar die Reihen-/Parallelschaltung des Energiespeicherelements, nicht aber den Vier-Quadranten-Betrieb gestatten. Solche Module werden im Folgenden kurz als "Zwei-Quadranten-Module" bezeichnet und unten anhand konkreter Ausführungsbeispiele vorgestellt. Der Verzicht auf den Vier-Quadranten-Betrieb gestattet dabei, weitere Schaltelemente einzusparen. Gleichzeitig gibt es viele Anwendungen, in denen Zwei-Quadranten-Module durchaus ausreichend sind, insbesondere Back-to-back-Systeme mit Gleichspannungszwischenkreisen, unidirektionale Punkt-zu-Punkt-Gleichspannungsverbindungen, insbesondere in der Windenergie, sowie bestimmte Kompensationssysteme.

### Dritter Modultyp

Fig. 21c zeigt einen dritten Modultyp, der speziell für den Zwei-Quadranten-Betrieb geeignet ist. Der dritte Modultyp umfasst ebenfalls einen ersten und einen zweiten Leiter 2141, 2142 sowie ein Energiespeicherelement C_{S}, das zwischen den ersten und den zweiten Leiter 2141, 2142 geschaltet ist. Ferner umfasst der dritte Modultyp einen Brückenzweig 2143, der zwischen den ersten und den zweiten Leiter 2141, 2142 geschaltet ist. Der Brückenzweig 2143 umfasst einen Abgriff 2144, der über ein erstes Schaltelement α mit dem ersten Leiter 2141 und über ein zweites Schaltelement β mit dem zweiten Leiter 2142 verbindbar ist. Dabei ist die eine Klemme A₁ des ersten Klemmpaares mit dem Abgriff 2124 verbunden und die andere Klemme A₂ des ersten Klemmenpaares über ein drittes Schaltelement γ mit dem ersten Leiter 2141 verbindbar. Ferner ist eine Klemme B1 des zweiten Klemmpaares über ein viertes Schaltelement δ mit dem ersten Leiter 2141 verbindbar und die andere Klemme B₂ des zweiten Klemmpaares mit dem zweiten Leiter 2142 verbunden.

Der Aufbau des dritten Modultyps von Fig. 21c gestattet die folgenden Zustände: Trennung des Energiespeicherelementes C_{S} vom Stromfluss ("Bypass" oder "Null-Volt-Modus"), Reihenschaltung (eine Polarität ist ausreichend) und die Möglichkeit zur zur polaritätsrichtigen Parallelschaltung.

Wie Fig. 21c zu entnehmen ist, beinhaltet der dritte Modultyp nur noch vier Schaltelemente α, β, γ und δ. Wie unten näher erläutert wird, lassen sich auch aus diesem dritten Modultyp weitere vereinfachte Module ableiten, indem nämlich auf eines der Schalterelemente γ, δ verzichtet wird, sodass das Einzelmodul sogar mit lediglich drei Schaltelement auskommt.

### Ausführungsbeispiele für Zwei-Quadranten-Module

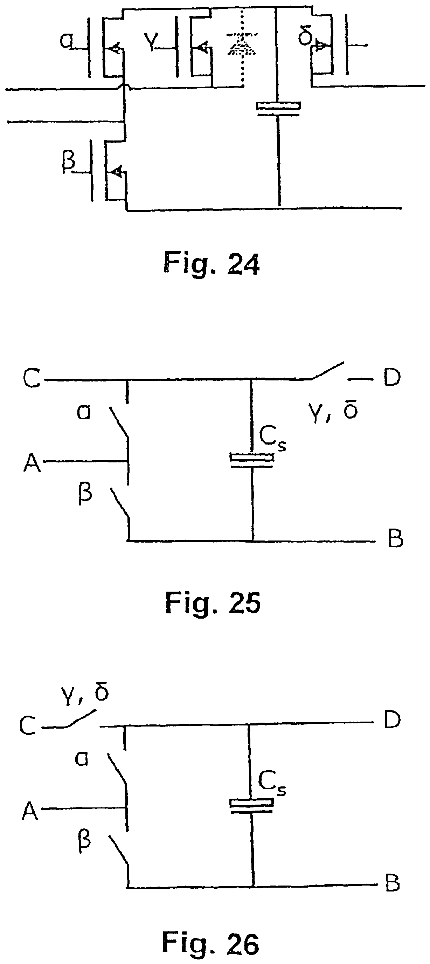

Fig. 24 zeigt eine Ausgestaltung des dritten Modultyps, bei der die Schaltelemente α, β, γ und δ durch Transistoren gebildet sind. In Fig. 24 ist die Freilaufdiode zum Transistor γ grau gezeichnet, um anzuzeigen, dass es sich um ein optionales Bauteil handelt. Fig. 25 und 26 zeigen Einzelmodule, die aus dem dritten Modultyp von Fig. 21c abgeleitet sind. Hierbei wird eines der beiden Schaltelemente γ, δ eingespart und das verbleibende Schalelement durch einen bidirektionalen Schalter ersetzt. In Fig. 25 und 26 ist das verbleibende Schaltelement durch die Bezugszeichen γ, δ gekennzeichnet, um darauf hinzuweisen, dass dieser bidirektionale Schalter die Funktion der Schaltelemente γ, δ des dritten Modultyps von Fig. 21c übernimmt. Dieses Schaltelement ist daher auch ohne Freilaufdiode ausgestattet. Als Schaltelemente können hier wie zuvor beschrieben MOSFETs, IGBTs, GTOs, Relais und dergleichen verwendet werden.

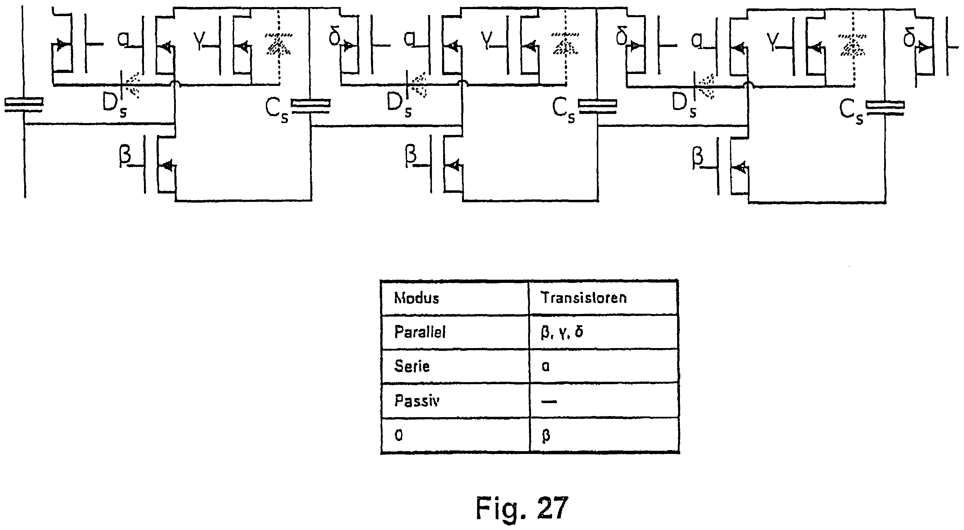

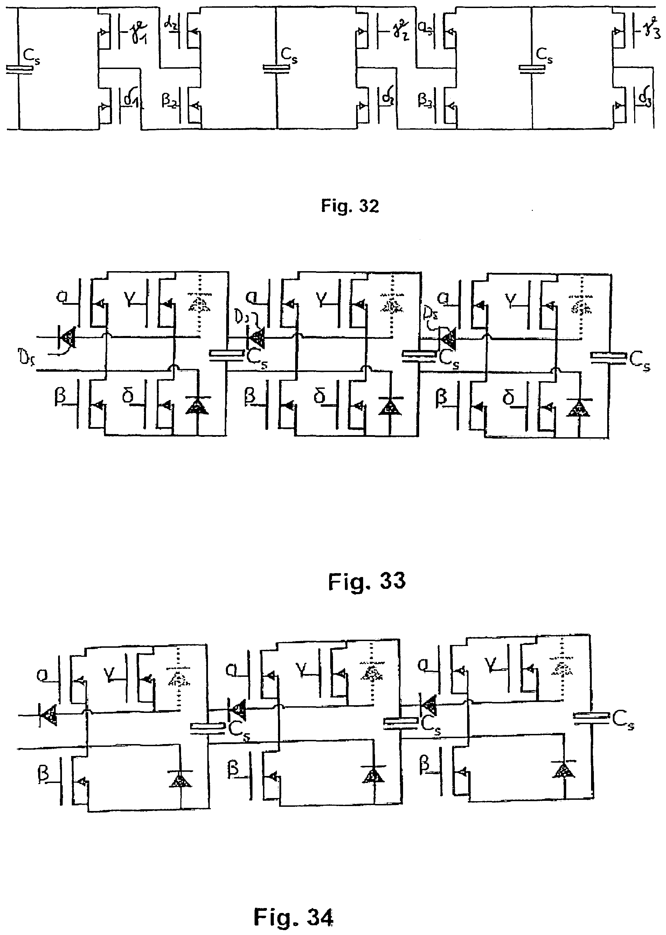

Fig. 27 zeigt eine Hintereinanderschaltung von Modulen von Fig. 24, d. h. des dritten Modultyps. Die Diode D_{S} ist wiederum grau dargestellt, um anzuzeigen, dass sie in dieser Ausgestaltung auch weggelassen werden könnte. Die Diode D_{S} wird erst in einer weiteren Abwandlung wirklich notwendig, die unten unter Bezugnahme auf Fig. 33 erläutert wird und in der die beiden in Reihe geschalteten Transistoren γ, δ durch einen einzigen Transistor ersetzt werden, d.h. γ oder δ dauerhaft geschlossen werden. Die Parallelschaltung erlaubt dann allerdings nur noch den Ladungsausgleich in eine Richtung. Falls γ oder δ durch einen bidirektionaloen Schalter ersetzt werden, kann auf die Diode Ds ebenfalls verzichtet werden, und der Strom kann in beide Richtungen fließen.

Aus Fig. 27 ist ersichtlich, dass die Gesamttopologie der Hintereinanderschaltung "modular" in dem Sinne ist, dass sich bestimmte Bauteilgruppen wiederholen. Allerdings ist es in manchen Anwendungen zu gewissem Grad Definitionssache, welche Bauteile welchem Modul zuzurechnen sind oder - mit anderen Worten - wo die Grenzen zwischen benachbarten Modulen verlaufen sollen. In der vorliegenden Offenbarung ist der Begriff "Modul" daher auch weit zu verstehen und nicht notwendigerweise auf eine diskrete bauliche Einheit beschränkt. Vielmehr bezeichnet der Begriff "Modul" ganz allgemein Untergruppen der Schaltungstopologie, d. h. bestimmte Bauelementgruppen innerhalb einer Schaltung. Allerdings können die "Module" in bestimmten Ausführungsformen in der Tat baulich getrennte Einheiten sein, die sich beispielsweise zusammenstecken lassen und einfach austauschbar und herstellbar sind.

Fig. 27 enthält weiterhin eine Schaltungstabelle der Hintereinanderschaltung von Fig. 27. Die linke Spalte der Schaltungstabelle bezeichnet den Modus, nämlich "parallel", "Serie" (d.h. Reihenschaltung), "passiv" (alle Schalter geöffnet) und "Null", wodurch der "Null-Volt-Modus" bzw. der "Bypass-Modus" bezeichnet ist. Die rechte Spalte nennt die Transistoren, die im entsprechenden Modus leitend geschaltet sind. Man beachte, dass der Passivmodus so geartet ist, dass unabhängig von der äußeren Spannung stets Energie in das Energiespeicherelement hineinfließt.

Wenn wie in Fig. 27 gezeigt zwei Transistoren γ und δ verwendet werden, lässt sich im Zuge der Parallelschaltung sogar die mögliche Ausgleichsrichtung zwischen Ladungen der Kondensatoren benachbarter Module vorgegeben, indem nur einer der beiden Transistoren aktiviert wird, während die entgegengesetzte Richtung von der Freilaufdiode des anderen Transistors unterbunden ist.

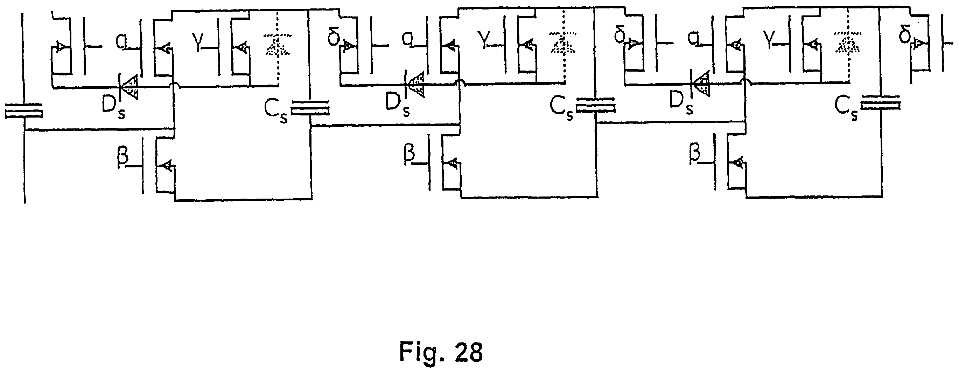

Die Topologie der Fig. 27 benötigt nur sehr wenige Halbleiterelemente (vier Stück pro Einzelmodul), die zudem lediglich auf die einfache Modulspannung ausgelegt sein müssen. Der Ladungsausgleich zwischen Kondensatoren benachbarter Module ist bidirektional möglich und lässt sich, wie gesagt, sogar in seiner Richtung steuern, da durch die Transistoren γ, δ die Stromrichtung definiert wird. Insofern ist die Topologie von Fig. 27 für Umrichtersysteme sowohl im Hinblick auf die Funktionalität als auch den vergleichweise einfachen und kostengünstigen Aufbau besonders attraktiv. Allerdings ist die in Fig. 27 gezeigte Hintereinanderschaltung auf den Zwei-Quadranten-Betrieb beschränkt. Fig. 28 zeigt im Wesentlichen dieselbe Topologie wie Fig. 27, jedoch polaritätsinvers.

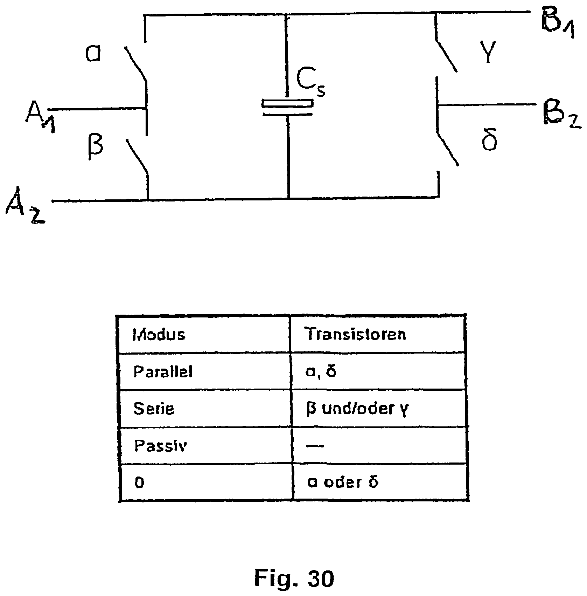

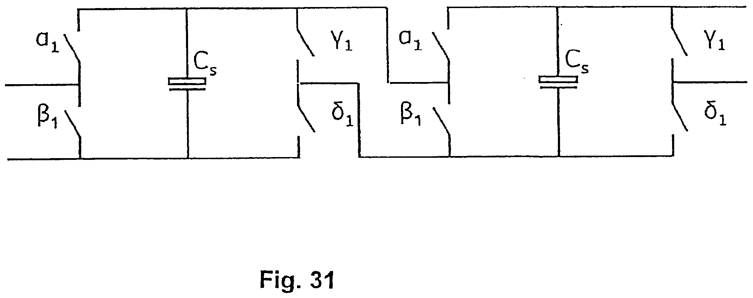

Ein weiteres Zwei-Quadranten-Einzelmodul ist in Fig. 29 gezeigt. Fig. 30 zeigt dieselbe Topologie, bei der jedoch die Transistoren durch abstrakte Schaltelement ersetzt wurden. Ferner zeigt Fig. 30 die zugehörige Schalttabelle. Fig. 31 zeigt zwei hintereinander geschaltete Module nach Fig. 30. Fig. 32 entspricht Fig. 31, bei der jedoch die abstrakten Schaltelemente durch Transistoren ersetzt wurden, also letztlich eine Hintereinanderschaltung zweier Einzelmodule nach Fig. 29.

Durch Vergleich mit Fig. 21a erkennt man, dass sich das Einzelmodul von Fig. 29 und 30 aus dem ersten Modultyp ableiten lässt, wie er in Fig. 21a abstrakt und in Fig. 21 unter Verwendung konkreter Transistoren dargestellt ist. Wie oben unter Bezugnahme auf Fig. 21a bereits erwähnt wurde, lässt sich demnach durch Weglassen von Schaltelementen aus dem allgemeinen Vier-Quadranten-Einzelmodul von Fig. 21 bzw. 21a ("erster Modultyp") ein Zwei-Quadranten-Modul ableiten, welches ebenfalls mit lediglich vier Schaltelementen auskommt. Diese Topologie lässt sich alternativ auch aus dem zweiten Modultyp von Fig. 21 ableiten und stellt damit im übertragenen Sinne den kleinsten gemeinsamen Nenner des ersten und des zweiten Modultyps dar.

Wie Fig. 30 zu entnehmen ist, lässt sich die Bypass-Schaltung ("Null Volt") auf zwei unterschiedliche Arten erreichen. Entweder wird der untere Pfad über den Schalter δ aktiviert oder der obere Pfad über den Transistor α aktiviert. Im Falle von Transistoren mit Bootstrap-Treibern ist die erste Variante bevorzugt.

In der konkreten Ausgestaltung von Fig. 29, d. h. mit Transistoren anstatt abstrakten Schaltelementen, wirkt das Modul im Passivmodus, d. h. ohne leitend geschalteten Transistor gegenüber seinen Klemmen als Gleichrichtermodul mit nachgeschaltetem polaren Kondensator.

Die Reihenschaltung lässt sich durch das Aktivieren einer der beiden Schalter β oder γ erreichen. Allerdings lassen sich auch beide Pfade gleichzeitig betätigen, wodurch der Kanalwiderstand entsprechend auf die Hälfte fällt. Hier zeigt sich ein großer Vorteil dieser Mikrotopologie. Kein einziger Transistor ist überflüssig, sondern jeder Transistor trägt zur Kanalbreite bei.

Eine Parallelschaltung wird durch Aktivieren der Schalterelemente α und δ erreicht. Erneut ist die höchste auftretende Spannung für jeden Transistor stets die einfache Modulspannung, wodurch der Aufbau nicht nur sehr robust und sicher gestaltet ist, sondern auch Mehrkosten für übermäßig dimensionierte Leistungshalbleiter vermieden werden können.

Eine weitere Ausführungsform ist in Fig. 33 gezeigt. Die Diode D_{S} ist optional und kann verwendet werden, um Kurzschlüsse zu verhindern, allerdings ist damit nur eine Stromrichtung möglich. Wenn die Diode D_{S} verwendet wird, kann auf den Transistor δ verzichtet werden, in diesem Falle lässt sich ein Einzelmodul mit lediglich drei Transistoren verwirklichen, s. Fig. 34.

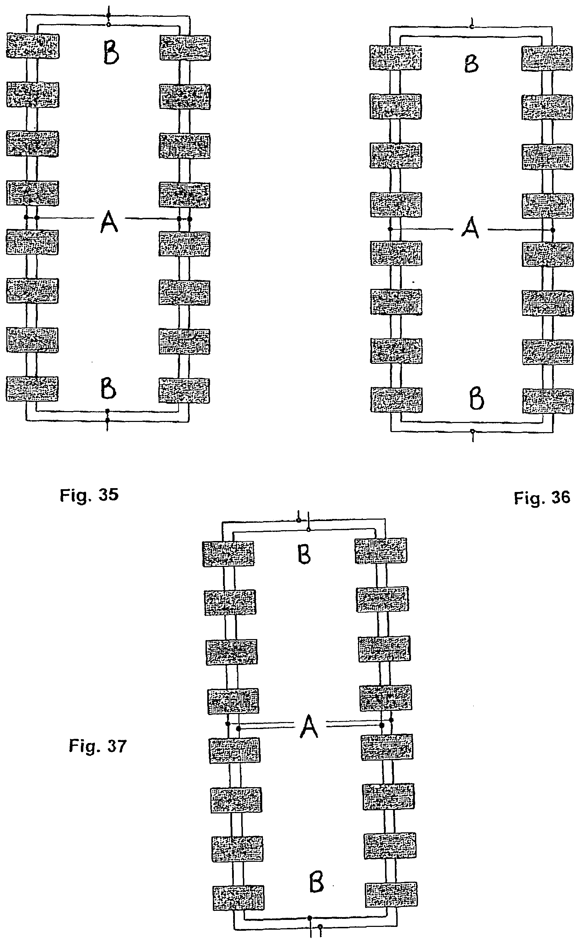

Fig. 35 - 37 zeigen Makrotopologien, in denen eine Mehrzahl von Zwei-Quadranten-Einzelmodulen (in den Figuren als graue Kästen gezeigt) für den Anschluss zweier Einphasensysteme A und B, im Folgenden auch "Abnehmer" genannt, verschaltet sind. Sofern die Energiebilanz die interne Speicherfähigkeit nicht erschöpft, kann auch dieses System gegenüber den äußeren Anschlüssen bzw. Klemmenpaaren beliebige, auch dynamische Strom-Spannungs-Verläufe vorgeben und damit ein beliebiges Bauteilverhalten imitieren. Das heißt, obwohl die Einzelmodule auf den Zwei-Quadranten-Betrieb beschränkt sind, kann das in Fig. 35 - 37 gezeigte Gesamtsystem in seiner Makrotopologie trotzdem als Vier-Quadranten-System ausgelegt werden, d. h. bipolar mit Stromflüssen in beiden Richtungen an allen von außen sichtbaren Klemmenpaaren umgehen. Wenn beispielsweise in Fig. 35 der linke untere Brückenzweig auf 4·V_{Modul} gesetzt wird (wobei die oberen Zweige ausgleichen, um einen Ringstrom zu vermeiden) und der rechte untere Brückenzweig auf OV gesetzt wird, ergibt sich zwischen den Klemmen des Klemmenpaars A eine Spannung von 4·V_{Modul}. Wird nun umgekehrt der linke untere Brückenzweig auf 0V und der rechte untere auf 4·V_{Modul} gesetzt, ergibt sich eine Klemmenspannung von - 4·V_{Modul}.

Für den Anschluss des Gesamtsystems an den Klemmenpaaren der Abnehmer A und B sind drei Möglichkeiten gezeigt: Gemäß Fig. 35 lassen sich die Klemmen an den Enden eines Konverterarms zusammenschließen. Dies entspricht der Situation von Fig. 11 - 14, bei denen die Klemmen des ersten Klemmenpaars des ersten Einzelmoduls und die Klemmen des zweiten Klemmenpaars des letzten Einzelmoduls der Hintereinanderschaltung miteinander verbunden sind. Dies ist insbesondere dann angebracht, wenn die Abnehmer schlichte klassische Quellen oder Senken sind, die nur über zwei Kontakte angeschlossen werden.

Alternativ ist es gemäß der zweiten Möglichkeit von Fig. 36 jedoch auch möglich, klassische Quellen/Senken nur an jeweils einer Klemme des betreffenden Einzelmoduls anzuschließen. Diese Option bietet den Vorteil, dass auch über einen Konverterarm und somit über ein Phasenmodul hinweg eine Parallelschaltung und somit sowohl ein Ladungsausgleich als auch eine Erhöhung der Stromlastfähigkeit möglich ist.

Schließlich zeigt Fig. 37 einen Fall, in dem die Abnehmer A, B selbst in der Lage sind mit dem vierpoligen System umzugehen. In diesem Fall hat jeder Abnehmer A, B dann einen Eingang mit vier Kontakten.

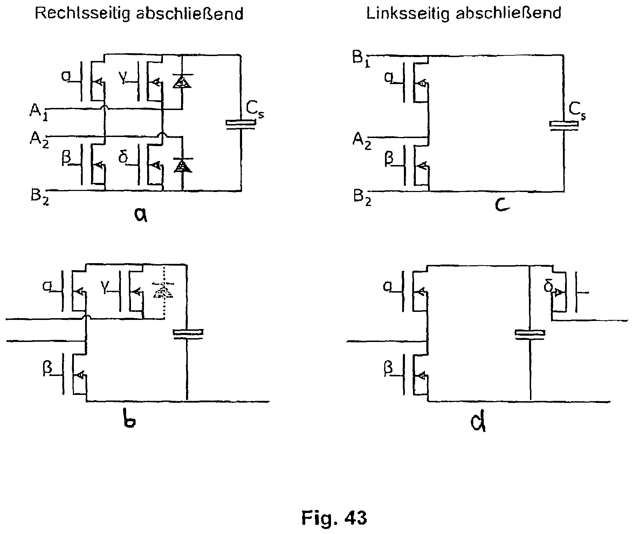

Falls das letzte bzw. erste Klemmenpaar der Hintereinanderschaltung nach Fig. 35 zusammengeschaltet werden, können auch spezielle Abschlussmodule verwendet werden, bei denen einer der Modulabgriffe eingespart wird. Beispielhafte Abschlussmodule sind in Fig. 43(a) - (d) gezeigt. Die Fig. 43 zeigt dabei "rechtsseitig abschließende" und "linksseitig abschließende" Module, wobei sich die Begriffe "rechtsseitig" und "linksseitig" selbstverständlich nur auf die gewählte zeichnerische Darstellung beziehen.

Die in der vorliegenden Schrift beschriebenen Einzelmodule können auch mit klassischen Zweipolmodulen nach R. Marquardt kombiniert werden. Auch können Zwei-Quadranten- und Vier-Quadranten-Module der hier beschriebenen Art kombiniert werden.

Ferner können die hier gezeigten Einzelmodule in sogenannte Hybridkonverter eingebettet werden, wie sie beispielsweise in Feldman, Tomasini, Clare, Wheeler, Trainer, Whitehouse (2010*).* A hybrid voltage source converter arrangement for HVDC power transmission and reactive power compensation. PEMD 2010, doi:10.1049/cp.2010.0093 beschrieben sind. Ein solcher Hybridkonverter vermeidet die klassische Makrotopologie aus Phasenmodulen und Konverterarmen und setzt klassische IGBT-Schalter parallel zu den Modulen ein. Ein ähnlicher Hybridkonverter ist auch in der WO 2011/015227 offenbart. Ein weiterer Hybridkonverter ist aus der WO 2010/149200 bekannt, der Schalter in die Konverterarme der Marquardt-Topologie einführt.

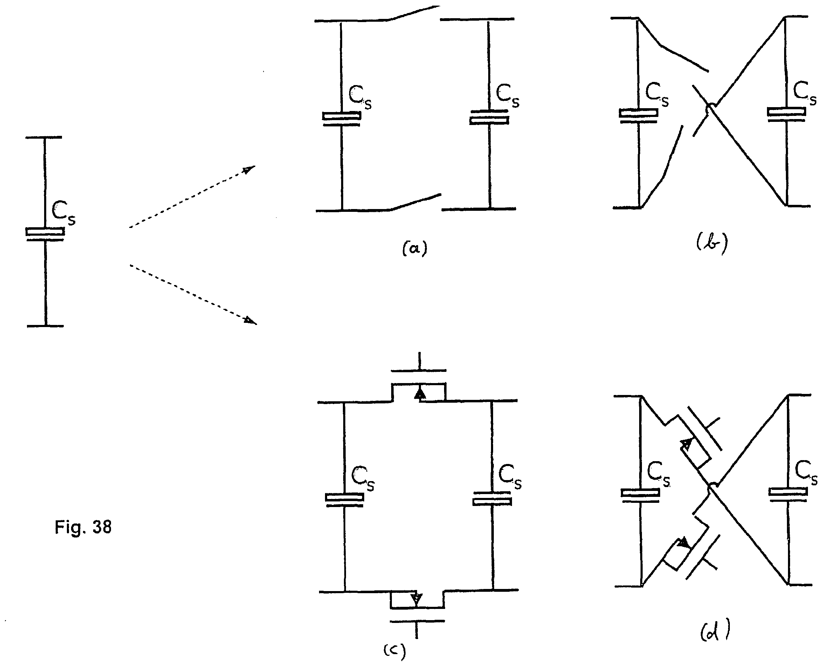

In den vorstehend beschriebenen Ausführungsformen war der Energiespeicher stets durch einen einzigen Kondensator C_{S} gebildet. Dies ist jedoch lediglich als beispielhaft zu verstehen und nicht für die vorliegende Erfindung beschränkend. Insbesondere kann ein "Energiespeicherelement" im Sinne der Erfindung auch durch eine Mehrzahl von Bauteilen, insbesondere eine Mehrzahl von Kondensatoren bestehen, die zudem noch über Schaltelemente verfügen können. Einige Beispiele hierfür sind in den Figuren 38 bis 42 gezeigt.

In Figur 38 ist schematisch dargestellt, wie ein einzelner Kondensator, der in den vorstehend beschriebenen Ausführungsformen stets als Energiespeicherelement verwendet wurde, durch die Verschaltung zweier Kondensatoren ersetzt werden kann. Diese Ersetzung wird durch die gestrichelten Pfeile illustriert. Figur 38(a) zeigte eine Anordnung mit zwei Kondensatoren C_{S}, deren Polarität vertauscht ist. Figur 38(b) zeigt eine hierzu äquivalente Schaltung. Figuren 38(c) und 38(d) zeigen konkrete Ausführungsformen, in denen die abstrakten Schaltelemente durch Transistoren ersetzt wurden. In dieser Darstellung wurden die entgegengesetzten Freilaufdioden der Einfachheit halber weggelassen.

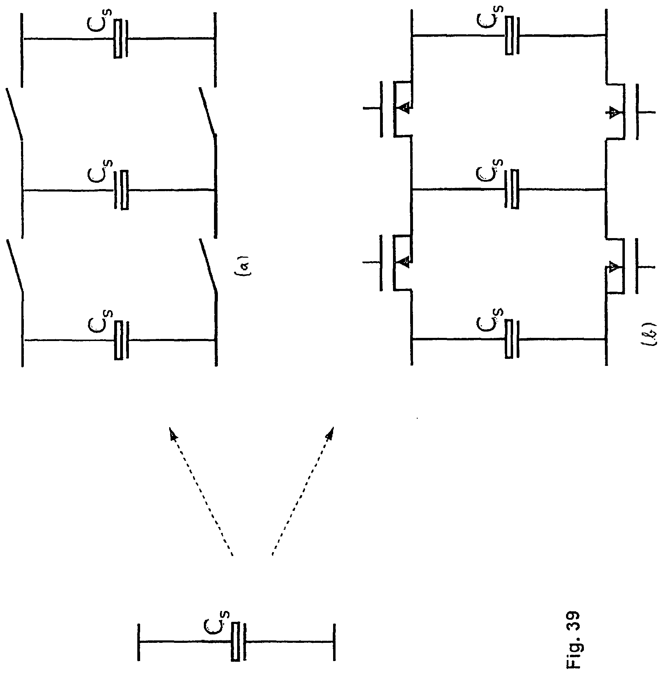

Figuren 39(a) und 39(b) zeigen eine Erweiterung des Aufbaus von Figur 38 auf drei Kondensatoren. Es versteht sich, dass die Zahl der Kondensatoren beliebig erhöht werden kann, um Energiespeicherelemente mit einer Vielzahl von Spannungsniveaus zu erzeugen.

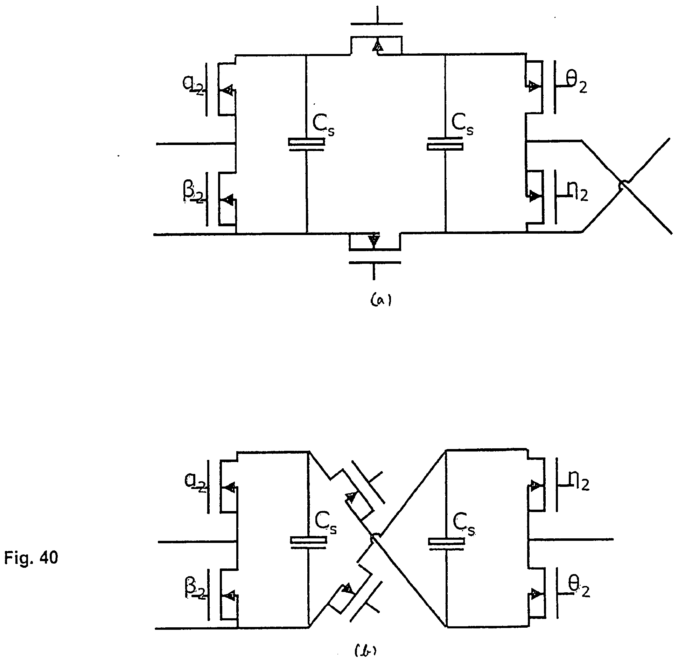

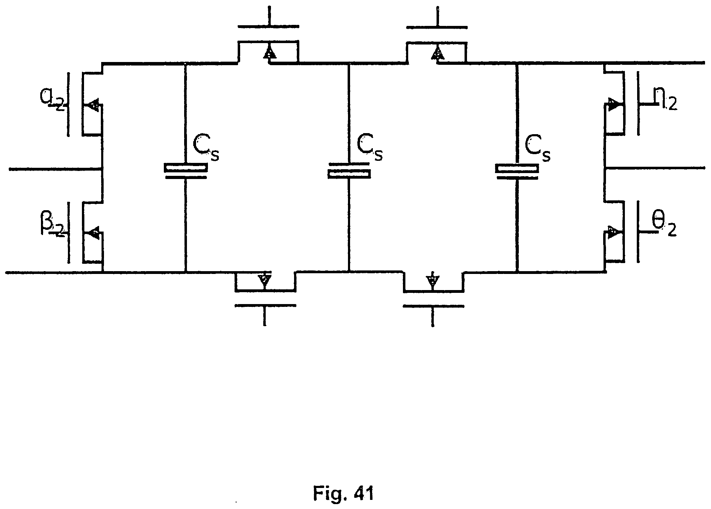

Figuren 40(a) und 40(b) zeigen Einzelmodule, in denen die Energiespeicherelemente von Figur 38(c) bzw. 38(d) verwendet werden. Ebenso zeigt Figur 41 ein Einzelmodul, in welchem das Energiespeicherelement von Figur 39(b) verwendet wird.

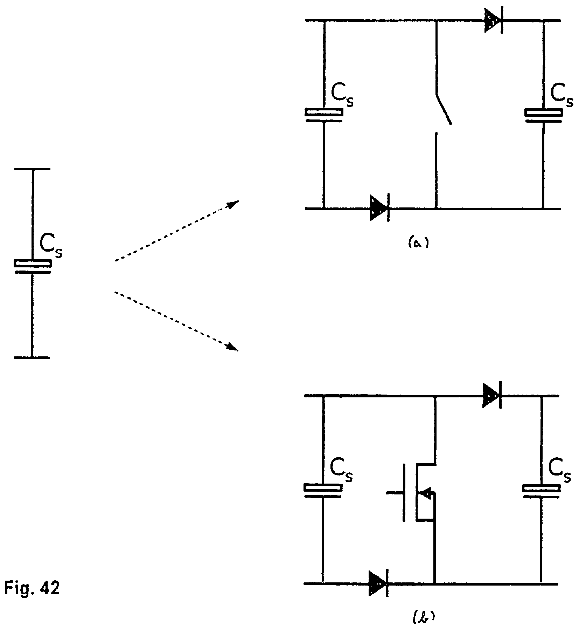

Figur 42(a) zeigt ein weiteres Beispiel für ein Energiespeicherelement mit abstrakten Schaltelementen, und Figur 42(b) das selbe Energiespeicherelement, bei dem das Schaltelement durch einen Transistor gebildet wird (Die Freilaufdiode wurde der Übersichtlichkeit halber weggelassen). Dieser Energiespeicher enthält zusätzlich zu dem Null-Volt-Zustand zwei weitere Spannungsniveaus.

### Ansteuerung der Einzelmodule

Jedes Einzelmodul sollte von einer eigenen Steuereinheit angesteuert werden, die über einen potentialfreien bidirektionalen Datenkanal mit einer gemeinsamen Kontrolleinheit verbunden ist, um einerseits die Schaltelemente zu steuern und andererseits die Spannungswerte des Energiespeicherelementes an die Kontrolleinheit weiterzuleiten. Alternativ können auch weitere Daten, wie Ströme oder Temperaturen der Bauelemente zur Kontrolleinheit übertragen werden. Insbesondere ist es zweckmäßig, wenn die Steuereinheiten in den Einzelmodulen direkt über die Spannung an den Klemmen der Einzelmodule elektrisch versorgt werden. Die Datenübertragung zur gemeinsamen Kontrolleinheit kann z.B. optisch erfolgen, um eine galvanische Trennung zu gewährleisten. Wird auf die Modularität vollständig verzichtet, ergibt sich die Möglichkeit, Ansteuerungssysteme zusammenzufassen, was ein Potential für Vereinfachung des Aufbaus und für Kosteneinsparungen beinhaltet. Beispielsweise lassen sich im Falle von transistorartigen Schaltern alle Schaltelemente mit gleichem Source-Kontakt in der potentialgetrennten Ansteuerung zusammenfassen.

### Externe Verschaltung der Module

Die maximale Flexibilität und damit für den bisher bekannten modularen Multilevel-Ansatz die übliche Wahl war eine volle Brücke für den Vierquadrantenbetrieb. Dieser erlaubte insbesondere, alle Module stets von jeder der beiden Eingangsseiten mit Energie zu versorgen. Die neue Entwicklung könnte jedoch auch andere Strukturen attraktiv werden lassen. Eine Reduzierung der vier Arme auf einen einfacheren Aufbau, sofern nicht alle vier Quadranten der Strom-Spannungs-Ebene benötigt werden, könnte in vielen Fällen Kostenvorteile bringen. Durch die Option der parallelen Verschaltung wäre stets ein Ladungstransport über die Module hinweg möglich.

Um das Parallelschalten der Energiespeicherelemente auch bei unterschiedlichen Spannungen der einzelnen Energiespeicherelementen verlustarm zu ermöglichen, sollte vor dem Parallelschalten zunächst ein Ladungs- und Spannungsausgleich vorgenommen werden. Hierzu ist es zweckmäßig, noch zusätzliche Ausgleichsglieder jeweils zwischen zwei Einzelmodule zu schalten, die eine Zwischenspeicherung eines Teils der Energie der Energiespeicherelemente erlaubten. Insbesondere können solche Ausgleichsglieder Induktivitäten enthalten.

### Vorteile der Erfindung:

- Der Schalter (z.B. Transistor) jedes Einzelmoduls gemäß Figur 9a, der die beiden Anschlüsse B1 und B2 verbindet (bzw. alternativ die beiden Anschlüsse A1 und A2) ist ebenso wie alle übrigen Schaltelemente nach dem Redundanzprinzip des Modulaufbaus gestaltet. Ist die Steuerung entsprechend ausgebildet, kann sie bei einem Defekt (in der Regel führt dies bei Halbleiterschaltern zu einem Durchlegieren und somit zu einem niederohmigen dauergeschlossenen Zustand) ohne größere Einschränkungen weiterarbeiten. Die einzige Schaltoption, die somit wegfällt, ist die Parallelverschaltung der beiden benachbart liegenden Einzelmodule. Ein Ausfall zieht somit keinerlei Standzeiten nach sich. Die Steuerung kann zur Entlastung des defekten Schalters zusätzlich die beiden Stromschienen über ein (langsames) Relais schließen und einen Wartungsauftrag für den mittelfristigen Austausch des Einzelmoduls/Transistors ausgeben.
- Die Auslegung der Bauelemente eines Moduls muss lediglich auf die Modulspannung festgelegt werden, so dass über eine Vielzahl von Einzelmodulen Umrichter mit sehr großen Spannungsfestigkeiten aufgebaut werden können. Zusätzliche Symmetrierungen sind hier nicht erforderlich.
- Die Schaltungstopologie der Einzelmodule gewährt durch die Energiespeicherelemente einen Überspannungsschutz gegenüber den Ein-/Ausgängen (Tiefpasswirkung).
- Ausfallsicherheit durch Ausnutzung der Redundanzen in der Steuerung.
- Die Option mit dem erfindungsgemäßen Aufbau die Energiespeicherelemente wahlweise in Serie oder parallel zu schalten erlaubt den Bau von Umrichtern mit großem Spannungsverhältnis (und entsprechendem Stromverhältnis) zwischen Ein- und Ausgangsklemmen. Ein solches System hat deutlich geringere Verluste als bisherige Umrichter, da jeweils bei der kleineren Spannung ein Anzahl von Modulen parallel geschaltet wird. Insbesondere werden die Ohmschen Verluste der Energiespeicher, aber auch der Schaltelemente reduziert.
- Umrichter mit stark induktiven oder stark kapazitiven Lasten können ebenso mit reduzierten Stromwärmeverlusten gegenüber herkömmlichen Systemen betrieben werden, da bei diesen Lasten hohe Ströme (die zu Stromwärmeverlusten führen) bei niedrigen Spannungen auftreten, so dass in diesen Zeitabschnitten ein Parallelschalten der Einzelmodule möglich ist.
- Es können bereits einzelne Brückenzweige (also die Serienschaltung mehrerer Module) für eine effektive Blindleistungskompensation eingesetzt werden.
- Die wahlweise Parallel- und Serienschaltung erlaubt einen (getakteten) Ladungsausgleich zwischen den Energiespeichern unterschiedlicher Module ohne einen Strom über den gesamten Umrichter oder gar über die Ein-/Ausgänge hinweg vorzunehmen. Diese Anwendung ist sowohl bei Einsatz von Kondensatoren oder auch bei Akkumulatoren als Energiespeicher sehr sinnvoll.
- Es können einfache robuste selbstlöschende Schaltelemente für die Querverbindung in den Einzelmodulen eingesetzt werden.
- Option anderer Modulverschaltungen durch Ausnutzen der Parallelverschaltung als «Eimerkette».

### Einsatzgebiete der Erfindung

Wegen Eigenschaften wie der einfachen Skalierbarkeit bietet sich für dieses System ein äußerst breites Anwendungsgebiet, das von Kleinspannungswandlung, Fahrzeuganwendungen bis zur Hoch- und Höchstspannungsebene reicht (Bahnverkehr, HVDC/HGÜ-Anlagen, Netzkopplungen, Leistungskompensation, Netzkopplung unterschiedlicher Spannungen und Frequenzen etc.).

Beispielsweise werden seit einigen Jahren vermehrt Systeme im Höchstspannungsbereich für HVDC-/HGÜ-Systeme zur verlustärmeren Energieübertragung über sehr weite Strecken entwickelt und gebaut. Derartige Systeme gelten insbesondere als großer Hoffnungsträger für die zukünftige Energieversorgung der Erde, sollte die «Energiegewinnung» beispielsweise aus Solarenergie nicht mehr in der Nähe der Verbraucher stattfinden können (siehe Projekte wie European Super Grid oder DESERTEC), sind jedoch durch ihre enorme Leistungsfähigkeit und zentrale Stellung - bei immerhin unbegrenztem Nutzerkreis - ein sehr teures, aber auch wertvolles Betriebsmittel. Gleichzeitig erfordern diese neuen regenerativen Energiequellen jedoch zusätzlich große Energiespeicher, da die Energie im erforderlichen Maß nicht mehr zur gleichen Zeit erzeugt werden kann, wie sie vom Verbraucher angefordert wird. Speichersysteme lassen sich nach derzeitigem Kenntnisstand am besten über den Einsatz von Wasserkraft realisieren (Pumpspeicherwerke), die sich eher in den kühleren Regionen Europas günstig realisieren lassen. Auch hier wären also weite Strecken für die entsprechende Energieanbindung zu überbrücken, was ebenfalls die HVDC-/HGÜ-Systeme interessant macht.

Die wahlweise Parallel- und Serienschaltung von Einzelmodulen ist weiterhin besonders günstig bei Umrichtern, die zumindest an einem Klemmenpaar eine stark variable Spannung bei gleichbleibend hohen Leistungen liefern (bzw. aufnehmen) soll. Dies ist beispielsweise bei Elektrofahrzeugen der Fall, bei denen einerseits für das Anfahren hohe Drehmomente (und damit hohe Ströme) bei vergleichsweise geringen Betriebsspannungen und andererseits für den normalen Fahrbetrieb eher geringe Drehmomente (und damit geringe Ströme) bei entsprechend höheren Betriebsspannungen erforderlich sind.

Ein weiteres mögliches Anwendungsgebiet stellt die Nervenreizung mit Magnetfeldern nach dem Induktionsprinzip dar. Eine auf das zu reizende Gewebe aufgelegte Spule erzeugt über einen Strompuls mit geeigneter Verlaufsform einen magnetischen Feldpuls, so dass induktiv im Gewebe ein Stromfluss induziert wird. Der Spulenstrom und das induzierte Spulenfeld sind so bemessen, dass der induzierte Strompuls ausreicht, um die Nerven zu depolarisieren und damit ein Aktionspotential auszulösen. Dieses Verfahren ist nahezu völlig schmerzfrei und gestattet daher viele Anwendungsmöglichkeiten in der Medizin. Allerdings werden bei bisherigen induktiven Reizverfahren nur sehr einfache resonante Schwingkreis-Schaltungen zur Pulserzeugung verwendet, deren sinusförmige Pulse energetisch nicht optimal sind. Der Einsatz eines Umrichters dagegen gestattet die Erzeugung entsprechend geformter zeitlich optimierter Strompulse, so dass sich der Energieaufwand zur Nervenreizung beträchtlich reduzieren ließe. Da auch bei dieser Anwendung eine induktive Last, nämlich die Reizspule, zu speisen ist, eignen sich Umrichter nach dem beschriebenen Konzept gemäß der vorliegenden Erfindung in besonderem Maße.

## Patentansprüche

1. Elektrisches Umrichtersystem für Stromversorgungen, umfassend mehrere gleichartige hintereinander geschaltete Einzelmodule (901, 910, 920, 930) **dadurch gekennzeichnet, dass**
jedes Einzelmodul mindestens drei, vorzugsweise mindestens vier interne Schaltelemente (903 - 914), mindestens ein Energiespeicherelement (923) und mindestens vier Anschlüsse aufweist, wobei je zwei der Anschlüsse als ein erstes (921) und ein zweites Klemmenpaar (922) dienen; und
die Hintereinanderschaltung von jeweils zwei Einzelmodulen so erfolgt, dass jeweils die Anschlüsse des zweiten Klemmenpaars eines vorhergehenden Einzelmoduls mit
- entweder den Anschlüssen des ersten Klemmenpaars des jeweils nachfolgenden Einzelmoduls, oder
- Anschlüssen mindestens eines Zwischenmoduls verbunden sind, welches zwischen dem vorhergehenden Einzelmodul und dem jeweils nachfolgenden Einzelmodul angeordnet ist,
wobei die Schaltelemente der jeweiligen Einzelmodule in der Hintereinanderschaltung der Einzelmodule ihre jeweiligen Energiespeicherelemente so mit den Klemmen der Hintereinanderschaltung verbinden, dass das Energiespeicherelement eines Einzelmoduls wahlweise entweder parallel oder in Serie zum Energiespeicherelement des nachfolgenden Einzelmodul geschaltet werden kann, und mit einer Steuerung, die dazu eingerichtet ist, eine Hintereinanderschaltung mehrerer Einzelmodule so zu steuern, dass innerhalb einer solchen Hintereinanderschaltung mindestens eine Serienschaltung von Energiespeicherelementen und eine Parallelschaltung von Energiespeicherelementen gleichzeitig vorliegt,
wobei zusätzlich parallel zu jedem Schaltelement (903 - 914) eine Diode liegt und die Dioden so geschaltet sind, dass sie die Schaltelemente vor Verpolung und Überspannung schützen.

2. Elektrisches Umrichtersystem nach Anspruch 1, bei dem mindestens eine Klemme des ersten Klemmenpaares des ersten Einzelmoduls der Hintereinanderschaltung und mindestens eine Klemme des zweiten Klemmenpaares des letzten Einzelmoduls der Hintereinanderschaltung als Klemmen der Hintereinanderschaltung dienen, und/oder
bei dem die internen Schaltelemente jedes Einzelmoduls so ausgeführt sind, dass sie wahlweise einen oder beide Anschlüsse eines Klemmenpaars mit dem Energiespeicherelement verbinden können.

3. Elektrisches Umrichtersystem nach Anspruch 1, wobei die Einzelmodule (940) jeweils so ausgeführt sind, dass ein Anschluss des ersten Klemmenpaars intern mit einem Anschluss des zweiten Klemmenpaars verbunden ist.

4. Elektrisches Umrichtersystem nach einem der vorhergehenden Ansprüche, wobei die Schaltelemente (903 - 914) als bipolare Transistoren, als IGBTs, als MOSFETs, als Thyristoren oder als GTOs ausgeführt sind, und/oder
wobei die Dioden so geschaltet sind, dass bei Öffnung sämtlicher Schaltelemente Energie nur in das Energiespeicherelement hineinfließen kann.

5. Elektrisches Umrichtersystem nach einem der vorhergehenden Ansprüche, wobei das Umrichtersystem nach dem Prinzip der Pulsweitenmodulation arbeitet und die Stromstärke über das Tastverhältnis der Pulsweitemodulation verändert.

6. Elektrisches Umrichtersystem nach einem der vorhergehenden Ansprüche, wobei das Energiespecherelement (923) als Kondensator, als Akkumulator oder als Solarzelle ausgeführt ist.

7. Elektrisches Umrichtersystem nach einem der vorhergehenden Ansprüche, wobei die Schaltelemente (903 - 914) eines Einzelmoduls (901, 910, 920, 930) einer Hintereinanderschaltung auch so gesteuert werden können, dass kein Strom durch das Energiespeicherelement (923) fließen kann oder dass keine elektrische Verbindung zu einem nachfolgenden Einzelmodul besteht.

8. Elektrisches Umrichtersystem nach einem der vorhergehenden Ansprüche, wobei die Hintereinanderschaltung von Einzelmodulen (901, 910, 920, 930) zusätzlich noch weitere Module mit anderen Eigenschaften enthält.

9. Elektrisches Umrichtersystem nach einem der vorhergehenden Ansprüche, bei dem das mindestens eine Zwischenmodul durch ein Ausgleichsglied zur Zwischenpufferung von Energie der Energiespeicherelemente (923) gebildet wird, wobei dieses Ausgleichsglied vorzugsweise eine Induktivität enthält.

10. Elektrisches Umrichtersystem nach einem der vorhergehenden Ansprüche, wobei die Hintereinanderschaltung der Einzelmodule (901, 910, 920, 930) einen Brückenzweig eines Umrichters bildet.

11. Elektrisches Umrichtersystem nach Anspruch 10, bei dem die Klemmen des ersten Klemmenpaars des ersten Einzelmoduls der Hintereinanderschaltung miteinander verbunden sind und eine erste Klemme des Brückenzweigs bilden und die Klemmen des zweiten Klemmenpaars des letzten Einzelmoduls der Hintereinanderschaltung miteinander verbunden sind und eine zweite Klemme des Brückenzweigs bilden, und/oder
wobei die Einzelmodule (901, 910, 920, 930) eines Brückenzweiges, die in der Mitte liegen, auf eine geringere Stromtragfähigkeit ausgelegt sind, als die Einzelmodule, die näher an den Enden des Brückenzweiges liegen.

12. Elektrisches Umrichtersystem nach Anspruch 10 oder 11, wobei der gebildete Brückenzweig durch eine pulsweitenmodulierte Ansteuerung der Einzelmodule (901, 910, 920, 930) die Phase des Stromes einer Wechselspannungsquelle gegenüber ihrer Spannung so verschiebt, dass der Brückenzweig zur Blindleistungskompensation verwendet werden kann, und/oder
wobei jeweils zwei Brückenzweige zu einem Phasenmodul zusammengeschaltet sind und mehrere solcher Phasenmodule mit einer gemeinsamen Sammelschiene verbunden sind, um den Umrichter ein- oder/und ausgangsseitig mit einem mehrphasigen System zu verbinden.

13. Elektrisches Umrichtersystem nach einem der vorhergehenden Ansprüche, bei dem das Einzelmodul aus einem ersten, einem zweiten oder einem dritten Modultyp ableitbar ist,
wobei der erste Modultyp folgendes umfasst:
- einen ersten und einen zweiten Leiter (2112, 2113),
- ein Energiespeicherelement Cs, das zwischen den ersten und den zweiten Leiter (2112, 2113) geschaltet ist,
- vier Brückenzweige (2114a-d), die zwischen den ersten und den zweiten Leiter (2112, 2113) geschaltet sind,
• wobei jeder Brückenzweig (2114a-d) einen Abgriff (2115a-d) umfasst, der über ein erstes Schaltelement (2116a-d) mit dem ersten Leiter (2112) und über ein zweites Schaltelement (2117a-d) mit dem zweiten Leiter (2113) verbindbar ist, und
• wobei jeweils einer der mindestens vier Anschlüsse (A₁, A₂, B₁, B₂) des Einzelmoduls mit einem der Abgriffe (2115a-d) der vier Brückenzweige (2114a-d) verbunden ist;
wobei ein Modul des zweiten Modultyps folgendes umfasst:
- einen ersten und einen zweiten Leiter (2121, 2122),
- ein Energiespeicherelement (Cs), das zwischen den ersten und den zweiten Leiter (2121, 2122) geschaltet ist,
- zwei Brückenzweige (2123a, 2123b), die zwischen den ersten und den zweiten Leiter (2121, 2122) geschaltet sind, wobei
• jeder Brückenzweig (2123a, 2123b) einen ersten Abgriff (2124a, 2124b) umfasst, der über ein erstes Schaltelement (2125a, 2125b) mit dem ersten Leiter (2121) verbindbar ist, einen zweiten Abgriff (2126a, 2126b) umfasst, der über ein zweites Schaltelement (2127a, 2127b) mit dem zweiten Leiter (2122) verbindbar ist, und der erste und der zweite Abgriff (2124a/b, 2126a/b) über ein drittes Schaltelement (2108a/b) miteinander verbindbar sind, und
• wobei jeweils eine Klemme (A₁, A₂) des ersten Klemmenpaares mit dem ersten bzw. zweiten Abgriff (2124a, 2126a) des einen Brückenzweigs (2123a), und jeweils eine Klemme (B₁, B₂) des zweiten Klemmenpaares mit dem ersten bzw. zweiten Abgriff (2124b, 2126b) des anderen Brückenzweigs (2123b) verbunden ist, und
wobei ein Modul des dritten Modultyps folgendes umfasst:
- einen ersten und einen zweiten Leiter (2141, 2142),
- ein Energiespeicherelement (Cs), das zwischen den ersten und den zweiten Leiter (2141, 2142) geschaltet ist,
- einen Brückenzweig (2143), der zwischen den ersten und den zweiten Leiter (2141, 2142) geschaltet ist,
• wobei der Brückenzweig (2143) einen Abgriff (2144) umfasst, der über ein erstes Schaltelement (α) mit dem ersten Leiter (2141) und über ein zweites Schaltelement (β) mit dem zweiten Leiter (2142) verbindbar ist,
• wobei die eine Klemme (A₁) des ersten Klemmenpaares mit dem Abgriff (2144) verbunden ist und die andere Klemme (A2) des ersten Klemmenpaares über ein drittes Schaltelement (γ) mit dem ersten Leiter (2141) verbindbar ist,
• wobei eine Klemme (B₁) des zweiten Klemmenpaars über ein viertes Schaltelement (δ) mit dem ersten Leiter (2141) verbindbar ist, und
• wobei die andere Klemme (B2) des zweiten Klemmenpaars mit dem zweiten Leiter (2142) verbunden ist,
und wobei ein Einzelmodul aus einem Modultyp abgeleitet wird, indem einzelne Schaltelemente des Moduls des jeweiligen Typs entfernt oder durch Leiter derart ersetzt werden, dass die verbleibenden Schaltelemente es dennoch gestatten, dass das Energiespeicherelement (Cs) mit einem Energiespeicherelement eines benachbarten Moduls wahlweise in Reihe oder parallel geschaltet wird.

14. Verfahren zur Ansteuerung eines Umrichters zur Steuerung von Strömen und Spannungen, wobei der Umrichter hintereinander geschaltete Einzelmodule (901, 910, 920, 930) umfasst und wobei jedes Einzelmodul mindestens drei, vorzugsweise mindestens vier interne Schaltelemente (903 - 914), mindestens ein Energiespeicherelement (923) und mindestens vier Anschlüsse aufweist, wobei je zwei der Anschlüsse als ein erstes (921) und als ein zweites Klemmenpaar (922) dient, wobei das Verfahren die folgenden Schritte umfasst:
Verbinden der Energiespeicherelemente hintereinanderliegender Einzelmodule über die internen Schaltelemente so, dass das Energiespeicherelement eines Einzelmoduls wahlweise entweder parallel oder in Serie zum Energiespeicherelement des nachfolgenden Einzelmodul geschaltet wird, wodurch eine Hintereinanderschaltung mehrerer Einzelmodule so gesteuert wird, dass innerhalb einer solchen Hintereinanderschaltung mindestens eine Serienschaltung von Energiespeicherelementen und eine Parallelschaltung von Energiespeicherelementen gleichzeitig vorliegt,
wobei die Hintereinanderschaltung von mindestens zwei Einzelmodulen so ausgeführt ist, dass jeweils die Anschlüsse des zweiten Klemmenpaars eines vorhergehenden Einzelmoduls mit
- entweder den Anschlüssen des ersten Klemmenpaars des jeweils nachfolgenden Einzelmoduls, oder
- Anschlüssen mindestens eines Zwischenmoduls verbunden sind, welches zwischen dem vorhergehenden Einzelmodul und dem jeweils nachfolgenden Einzelmodul angeordnet ist,
wobei zusätzlich parallel zu jedem Schaltelement (903 - 914) eine Diode liegt und die Dioden so geschaltet sind, dass sie die Schaltelemente vor Verpolung und Überspannung schützen.

15. Verfahren nach Anspruch 14, wobei die Einzelmodule (901, 910, 920, 930) nach dem Prinzip der Pulsweitenmodulation angesteuert werden, so dass der Umrichter die Stromstärke über das Tastverhältnis der Pulsweitemodulation verändern kann,
wobei die Einzelmodule (901, 910, 920, 930) des Umrichters vorzugsweise so angesteuert werden, dass zwischen Strom und Spannung einer erzeugten Wechselspannung eine Phasenverschiebung entsteht, so dass der Umrichter ein- und/oder ausgangsseitig zur Blindleistungskompensation verwendet werden kann, und/oder
bei dem wahlweise einer oder beide Anschlüsse eines jeden Klemmenpaares mit dem Energiespeicherelement verbunden werden.

## Claims

1. An electrical converter system for power supplies, comprising at least two identical individual modules (901, 910, 920, 930) in a cascade connection, **characterised in that**
each individual module has at least three, preferably at least four internal switching elements (903 - 914), at least one energy storage element (923) and at least four connectors, wherein the connectors serve in pairs as a first (921) and a second terminal pair (922); and
at least two individual modules are cascade connected in such manner that each of the connectors of the second terminal pair of a preceding individual module is connected with
- either the connectors of the first terminal pair of the respective following individual module, or
- connectors of at least one intermediate module, which is arranged between the preceding individual module and the respective following individual module,
wherein the switching elements of the respective individual modules in the cascade connection of individual modules connect their respective energy storage elements to the terminals of the cascade connection thereof in such manner that the energy storage element of an individual module can be connected selectively either in parallel or in series with the energy storage element of its subsequent individual module, thereby permitting controlling a cascade connection of plural individual modules so that in such a cascade connection, a series connection of energy storage elements and a parallel connection of energy storage elements is simultaneously present,
wherein a diode is additionally arranged parallel to each switching element (903 - 914), and the diodes are connected in such manner that they protect the switching elements from polarity reversal and overload.

2. The electrical converter system according to claim 1, in which at least one terminal of the first terminal pair of the first individual module of the cascade connection and at least one terminal of the second terminal pair of the last individual module of the cascade connection serve as terminals of the cascade connection, and/or
in which the internal switching elements of each individual module are designed in such manner that they can selectively connect one or both connectors of a terminal pair to the energy storage element.

3. The electrical converter system according to claim 1, in which the individual modules (940) are each designed in such manner that a connector of the first terminal pair is connected internally with a connector of the second terminal pair.

4. The electrical converter system according to any of the preceding claims, wherein the switching elements (903 - 914) are in the form of bipolar transistors, IGBTs, MOSFETs, thyristors or GTOs, and/or
in which the diodes are connected in such manner that when all switching elements are open energy can only flow into said energy storage element.

5. The electrical converter system according to any of the preceding claims, wherein the converter system operates according to the pulse width modulation principle and the current strength is altered via the duty cycle of the pulse width modulation.

6. The electrical converter system according to any of the preceding claims, wherein the energy storage element (923) is designed as a capacitor, an accumulator or a solar cell.

7. The electrical converter system according to any of the preceding claims, wherein the switching elements (903 - 914) of an individual module (901, 910, 920, 930) of a cascade connection can also be controlled in such manner that no current can flow through the energy storage element (923) or that no electrical connection with a following individual module is present.

8. The electrical converter system according to any of the preceding claims, wherein the cascade connection of individual modules (901, 910, 920, 930) also contains additional modules with other properties.

9. The electrical converter system according to any of the preceding claims, in which the at least one intermediate module has the form of a balancing member for intermediate buffering of energy from the energy storage element (923), wherein said balancing member preferably has an inductance.

10. The electrical converter system according to any of the preceding claims, wherein the cascade connection of the individual modules (901, 910, 920, 930) forms a bridge branch of a converter.

11. The electrical converter system according to claim 10, in which the terminals of the first terminal pair of the first individual module of the cascade connection are connected to one another and form a first terminal of the bridge branch, and the terminals of the second terminal pair of the last individual module of the cascade connection are connected to one another and form a second terminal of the bridge branch, and/or
wherein the individual modules (901, 910, 920, 930) of a bridge branch that are in the middle are designed with a lower current carrying capacity than the individual modules that are arranged closer to the ends of the bridge branch.

12. The electrical converter system according to claim 10 or 11, wherein the bridge branch formed by a pulse width modulated actuation of the individual modules (901, 910, 920, 930) offsets the phase of the current of an AC voltage source relative to the voltage thereof in such manner that the bridge branch can be used for power factor correction, and/or
wherein bridge branches are connected in pairs to form a phase module and a plurality of such phase modules are connected together to form a common busbar in order to connect the input and/or output side of the converter to a multiphase system.

13. The electrical converter system according to any of the preceding claims, in which the individual module can be derived from a first, a second or a third module type, wherein the first module time comprises the following:
- a first and a second conductor (2112, 2113),
- an energy storage element Cs, connected between the first and the second conductor (2112, 2113),
- four bridge branches (2114a-d), connected between the first and the second conductor (2112, 2113),
• wherein each bridge branch (2114a-d) comprises a pickup (2115a-d) that may be connected to the first conductor (2112) via a first switching element (2116a-d) and to the second conductor (2113) via a second switching element (2117a-d), and
• wherein each of the at least four connections (A₁, A₂, B₁, B₂) of the individual module is connected to one of the pickups (2115a-d) on the four bridge branches (2114a-d);
wherein a module of the second module type comprises the following:
- a first and a second conductor (2121, 2122),
- an energy storage element (Cs), connected between the first and the second conductor (2121, 2122),
- two bridge branches (2123a, 2123b) connected between the first and the second conductor (2121, 2122), wherein
• each bridge branch (2123a, 2123b) comprises a first pickup (2124a, 2124b) that may be connected to the first conductor (2121) via a first switching element (2125a, 2125b) a second pickup (2126a, 2126b) that may be connected to the second conductor (2122) via a second switching element (2127a, 2127b), and the first and second pickups (2124a/b, 2126a/b) may be connected to one another via a third switching element (2108a/b), and
• wherein one terminal (A₁, A₂) of the first terminal pair is connected to the first or second pickup (2124a, 2126a) of one bridge branch (2123a), and one terminal (B₁, B₂) of the second terminal pair is connected to the first or second pickup (2124b, 2126b) of the other bridge branch (2123b), and
wherein a module of the third module type comprises the following:
- a first and a second conductor (2141, 2142),
- an energy storage element (Cs), connected between the first and the second conductor (2141, 2142),
- a bridge branch (2143) connected between the first and the second conductor (2141, 2142),
• wherein the bridge branch (2143) comprises a pickup (2144) that may be connected to the first conductor (2141) via a first switching element (α) and to the second conductor (2142) via a second switching element (β),
• wherein the one terminal (A₁) of the first terminal pair is connected to the pickup (2144) and the other terminal (A₂) of the first terminal pair may be connected to the first conductor (2141) via a third switching element (γ),
• wherein a terminal (B₁) of the second terminal pair may be connected to the first conductor (2141) via a fourth switching element (δ), and
• wherein the other terminal (B₂) of the second terminal pair is connected to the second conductor (2142),
and wherein an individual module is derived from a module type by the removal of individual switching elements of the module of the respective type or replacement thereof with conductors in such manner that it is still possible with the remaining switching elements for the energy storage element (Cs) to be connected selectively in series or in parallel with an energy storage element of an adjacent module.

14. A method for actuating a converter for control of currents and voltages, wherein the converter comprises consecutively connected individual modules (901, 910, 920, 930) and wherein each individual module has at least three, preferably at least four internal switching elements (903 - 914), at least one energy storage element (923) and at least four connectors, wherein pairs of the connectors serve as a first (921) and a second terminal pair (922), wherein the method comprises the following steps:
connecting the energy storage elements of consecutive individual modules via the internal switching elements in such manner that the energy storage element of an individual module is connected selectively either in parallel or in series with the energy storage element of its subsequent individual module, thereby controlling a cascade connection of plural individual modules so that in such a cascade connection, a series connection of energy storage elements and a parallel connection of energy storage elements is simultaneously present,
wherein the cascade connection of at least two individual modules is designed in such manner that the connectors of the second terminal pair of a preceding individual module are is connected
- either with the connectors of the first terminal pair of the respective following individual module, or
- connectors of at least one intermediate module, which is arranged between the preceding individual module and the respective following individual module,
wherein a diode is additionally arranged parallel to each switching element (903 - 914), and the diodes are connected in such manner that they protect the switching elements from polarity reversal and overload.

15. A method according to claim 14, wherein the individual modules (901, 910, 920, 930) are actuated according to the principle of pulse width modulation such that the converter is able to change the current strength via the duty cycle of the pulse width modulation,
wherein the individual modules (901, 910, 920, 930) of the converter are preferably actuated in such manner that a phase offset is created between the current and voltage of a generated AC voltage, such that the converter can be used for power factor correction at the input and or output, and/or
in which one or both connectors of any terminal pair are connected selectively to the energy storage element.

## Revendications

1. Système de convertisseur électrique pour alimentations électriques, comprenant plusieurs modules individuels (901, 910, 920, 930) de même type montés les uns derrière les autres, **caractérisé en ce que**
chaque module individuel présente trois, de préférence au moins quatre, éléments de commutation (903 - 914) internes, au moins un élément accumulateur d'énergie (923) et au moins quatre connexions, respectivement deux des connexions servant de première (921) et de deuxième paire de bornes (922) ; et
le montage l'un derrière l'autre de respectivement deux modules individuels s'effectue de telle sorte que respectivement les connexions de la deuxième paire de bornes d'un module individuel précédent
- sont raccordées soit aux connexions de la première paire de bornes du module individuel respectivement suivant, soit
- à des connexions d'au moins un module intermédiaire qui est disposé entre le module individuel précédent et le module individuel respectivement suivant,
les éléments de commutation des modules individuels respectifs dans le montage les uns derrière les autres des modules individuels raccordent leurs éléments accumulateurs d'énergie respectifs aux bornes du montage les uns derrière les autres de telle sorte que l'élément accumulateur d'énergie d'un module individuel peut être monté au choix soit en parallèle soit en série avec l'élément accumulateur d'énergie du module individuel suivant, et avec une commande qui est agencée pour commander un montage les uns derrière les autres de plusieurs modules individuels de telle sorte que, à l'intérieur d'un tel montage les uns derrière les autres, on est simultanément en présence d'au moins un montage en série d'éléments accumulateurs d'énergie et d'un montage en parallèle d'éléments accumulateurs d'énergie,
une diode étant en plus en parallèle avec chaque élément de commutation (903 - 914), et les diodes étant montées de telle sorte qu'elles protègent les éléments de commutation contre une inversion de polarité et une surtension.

2. Système de convertisseur électrique selon la revendication 1, dans lequel au moins une borne de la première paire de bornes du premier module individuel du montage l'un derrière l'autre et au moins une borne de la deuxième paire de bornes du dernier module individuel du montage l'un derrière l'autre servent de bornes du montage l'un derrière l'autre, et/ou
dans lequel les éléments de commutation internes de chaque module individuel sont réalisés de telle sorte qu'ils peuvent au choix raccorder une ou les deux connexions d'une paire de bornes à l'élément accumulateur d'énergie.

3. Système de convertisseur électrique selon la revendication 1, les modules individuels (940) étant respectivement réalisés de telle sorte qu'une connexion de la première paire de bornes est raccordée en interne à une connexion de la deuxième paire de bornes.

4. Système de convertisseur électrique selon l'une des revendications précédentes, les éléments de commutation (903 - 914) étant réalisés en tant que transistors bipolaires, en tant qu'IGBT, en tant que MOSFET, en tant que thyristors ou en tant que GTO, et/ou
les diodes étant montées de telle sorte que, lors de l'ouverture de tous les éléments de commutation, l'énergie ne peut s'écouler que dans l'élément accumulateur d'énergie.

5. Système de convertisseur électrique selon l'une des revendications précédentes, le système de convertisseur travaillant selon le principe de la modulation de largeur d'impulsion et modifiant l'intensité électrique par le biais du rapport cyclique de la modulation de largeur d'impulsion.

6. Système de convertisseur électrique selon l'une des revendications précédentes, l'élément accumulateur d'énergie (923) étant réalisé en tant que condensateur, en tant qu'accumulateur ou en tant que cellule solaire.

7. Système de convertisseur électrique selon l'une des revendications précédentes, les éléments de commutation (903 - 914) d'un module individuel (901, 910, 920, 930) d'un montage l'un derrière l'autre pouvant également être commandés de telle sorte qu'aucun courant ne peut travers l'élément accumulateur d'énergie (923) ou de telle sorte qu'il n'y a aucun raccordement électrique vers un module individuel suivant.

8. Système de convertisseur électrique selon l'une des revendications précédentes, le montage l'un derrière l'autre de modules individuels (901, 910, 920, 930) contenant en plus encore d'autres modules ayant d'autres caractéristiques.

9. Système de convertisseur électrique selon l'une des revendications précédentes, dans lequel le module intermédiaire au moins au nombre de un est formé par un organe de compensation pour le stockage intermédiaire d'énergie des éléments accumulateurs d'énergie (923), cet organe de compensation contenant de préférence une inductance.

10. Système de convertisseur électrique selon l'une des revendications précédentes, le montage l'un derrière l'autre des modules individuels (901, 910, 920, 930) formant une branche de pont d'un convertisseur.

11. Système de convertisseur électrique selon la revendication 10, dans lequel les bornes de la première paire de bornes du premier module individuel du montage les uns derrière les autres sont raccordées les unes aux autres et forment une première borne de la branche de pont, et les bornes de la deuxième paire de bornes du dernier module individuel du montage les uns derrière les autres sont raccordées les unes aux autres et forment une deuxième borne de la branche de pont, et/ou
les modules individuels (901, 910, 920, 930) d'une branche de pont qui sont situés au milieu sont conçus pour une capacité de charge électrique plus faible que les modules individuels qui sont plus près des extrémités de la branche de pont.

12. Système de convertisseur électrique selon la revendication 10 ou 11, la branche de pont formée déphasant, par un pilotage modulé en largeur d'impulsion des modules individuels (901, 910, 920, 930), le courant d'une source de tension alternative par rapport à sa tension de telle sorte que la branche de pont peut être utilisée pour la compensation de puissance réactive, et/ou
respectivement deux branches de pont étant inter-commutées en un module de phase, et plusieurs modules de phase de ce genre étant raccordés à une barre omnibus commune pour raccorder le convertisseur côté entrée et/ou sortie à un système multiphasé.

13. Système de convertisseur électrique selon l'une des revendications précédentes, dans lequel le module individuel peut être dérivé à partir d'un premier, d'un deuxième ou d'un troisième type de module,
le premier type de module comprenant ce qui suit :
- un premier et un deuxième conducteur (2112, 2113),
- un élément accumulateur d'énergie Cₛ, qui est monté entre le premier et le deuxième conducteur (2112, 2113),
- quatre branches de pont (2114a-d) qui sont montées entre le premier et le deuxième conducteur (2112, 2113),
• chaque branche de pont (2114a-d) comprenant une prise (2115a-d) qui peut être raccordée au premier conducteur (2112) par le biais d'un premier élément de commutation (2116a-d), et au deuxième conducteur (2113) par le biais d'un deuxième élément de commutation (2117a-d), et
• une des au moins quatre connexions (A₁, A₂, B₁, B₂) du module individuel étant respectivement raccordée à une des prises (2115a-d) des quatre branches de pont (2114a-d) ;
un module du deuxième type de module comprenant ce qui suit :
- un premier et un deuxième conducteur (2121, 2122),
- un élément accumulateur d'énergie (Cₛ), qui est monté entre le premier et le deuxième conducteur (2121, 2122),
- deux branches de pont (2123a, 2123b) qui sont montées entre le premier et le deuxième conducteur (2121, 2122),
• chaque branche de pont (2123a-2123b) comprenant une première prise (2124a-2124b) qui peut être raccordée au premier conducteur (2121) par le biais d'un premier élément de commutation (2125a-2125b), comprenant une deuxième prise (2126a, 2126b) qui peut être raccordée au deuxième conducteur (2122) par le biais d'un deuxième élément de commutation (2127a-2127b), et la première et la deuxième prise (2124a/b, 2126a/b) pouvant être raccordées l'une à l'autre par le biais d'un troisième élément de commutation (2108a/b), et
• respectivement une borne (A₁, A₂) de la première paire de bornes étant raccordée à la première ou respectivement à la deuxième prise (2124a, 2126a) d'une branche de pont (2123a), et respectivement une borne (B₁, B₂) de la deuxième paire de bornes étant raccordée à la première ou respectivement à la deuxième prise (2124b, 2126b) de l'autre branche de pont (2123b), et
un module du troisième type de module comprenant ce qui suit :
- un premier et un deuxième conducteur (2141, 2142),
- un élément accumulateur d'énergie (Cₛ) qui est monté entre le premier et le deuxième conducteur (2141, 2142),
- une branche de pont (2143) qui est montée entre le premier et le deuxième conducteur (2141, 2142),
• la branche de pont (2143) comprenant une prise (2144) qui peut être raccordée au premier conducteur (2141) par le biais d'un premier élément de commutation (a) et au deuxième conducteur (2142) par le biais d'un deuxième élément de commutation (β),
• une borne (A₁) de la première paire de bornes étant raccordée à la prise (2144), et l'autre borne (A₂) de la première paire de bornes pouvant être raccordée au premier conducteur (2141) par le biais d'un troisième élément de commutation (γ),
• une borne (B₁) de la deuxième paire de bornes pouvant être raccordée au premier conducteur (2141) par le biais d'un quatrième élément de commutation (5), et
• l'autre borne (B₂) de la deuxième paire de bornes étant raccordée au deuxième conducteur (2142),
et un module individuel étant dérivé d'un type de module par le fait que des éléments de commutation individuels du module du type respectif sont enlevés ou remplacés par des conducteurs de telle sorte que les éléments de commutation restants permettent encore de monter l'élément accumulateur d'énergie (Cₛ) au choix en série ou en parallèle avec un élément accumulateur d'énergie d'un module voisin.

14. Procédé de pilotage d'un convertisseur pour la commande de courants et de tensions, le convertisseur comprenant des modules individuels (901, 910, 920, 930) montés les uns derrière les autres, et chaque module individuel présentant au moins trois, de préférence au moins quatre, éléments de commutation (903 - 914) internes, au moins un élément accumulateur d'énergie (923) et au moins quatre connexions, deux des connexions servant respectivement de première paire de bornes (921) et de deuxième paire de bornes (922), le procédé comprenant les étapes suivantes :
raccordement des éléments accumulateurs d'énergie de modules individuels montés les uns derrière les autres par le biais des éléments de commutation internes de telle sorte que l'élément accumulateur d'énergie d'un module individuel est monté au choix soit en parallèle soit en série avec l'élément accumulateur d'énergie du module individuel suivant, ce qui fait qu'un montage les uns derrière les autres de plusieurs modules individuels est commandé de telle sorte que, à l'intérieur d'un tel montage les uns derrière les autres, on est simultanément en présence d'au moins un montage en série d'éléments accumulateurs d'énergie et d'un montage en parallèle d'éléments accumulateurs d'énergie,
le montage les uns derrière les autres d'au moins deux modules individuels étant réalisé de telle sorte que respectivement les connexions de la deuxième paire de bornes d'un module individuel précédent
- sont raccordées soit aux connexions de la première paire de bornes du module individuel respectivement suivant, ou
- à des connexions d'au moins un module intermédiaire qui est disposé entre le module individuel précédent et le module individuel respectivement suivant,
une diode étant en plus en parallèle avec chaque élément de commutation (903 - 914), et les diodes étant montées de telle sorte qu'elles protègent les éléments de commutation contre une inversion de polarité ou une surtension.

15. Procédé selon la revendication 14, les modules individuels (901, 910, 920, 930) étant pilotés selon le principe de la modulation de largeur d'impulsion de sorte que le convertisseur peut faire varier l'intensité électrique par le biais du rapport cyclique de la modulation de largeur d'impulsion,
les modules individuels (901, 910, 920, 930) du convertisseur étant de préférence pilotés de telle sorte qu'un déphasage apparaît entre le courant et la tension d'une tension alternative produite de sorte que, côté entrée et/ou sortie, le convertisseur peut être utilisé pour la compensation de puissance réactive, et/ou
dans lequel au choix une connexion ou les deux connexions de chaque paire de bornes sont raccordées à l'élément accumulateur d'énergie.
